# EUROPÄISCHE PATENTSCHRIFT

(11) **EP 3 930 954 B1**
(45) Veröffentlichungstag und Bekanntmachung des Hinweises auf die Patenterteilung: **14.08.2024**
(21) Anmeldenummer: 20711058.6
(22) Anmeldetag: 28.02.2020
(51) Int. Cl.: B23K 26/10, B23K 26/352, B23K 26/70, B23K 26/03, B23K 37/047

(54) **VERFAHREN UND VORRICHTUNGEN ZUR HERSTELLUNG VON AUFGERAUTEN OBERFLÄCHEN**
METHOD AND DEVICES FOR PRODUCING ROUGHENED SURFACES
PROCÉDÉ ET DISPOSITIFS DE PRODUCTION DE SURFACES RUGUEUSES

(30) Priorität: 01.03.2019 DE 102019105295
(43) Veröffentlichungstag der Anmeldung: 05.01.2022
(73) Patentinhaber: Gehring Technologies GmbH + Co. KG, 73760 Ostfildern (DE)
(72) Erfinder: FLORES, Gerhard, 73760 Ostfildern (DE); FREITAG, Martin, 72622 Nürtingen (DE); BEY, Oliver, 73760 Ostfildern (DE)
(74) Vertreter: DREISS Patentanwälte PartG mbB
(86) Internationale Anmeldenummer: PCT/EP2020/055326
(87) Internationale Veröffentlichungsnummer: WO 2020/178189

(56) Entgegenhaltungen:
- EP-A1- 3 187 303
- DE-A1- 102016 103 578
- DE-U1- 202009 004 927
- DE-U1- 202016 103 591
- US-A1- 2018 272 467

## Beschreibung

Die Erfindung betrifft Vorrichtungen und Verfahren zur Herstellung von aufgerauten Oberflächen nach den Oberbegriffen der unabhängigen Ansprüche.

Aus der US 2018/0126488 A1 und der DE 10 2019 108 096 A1 sind jeweils Werkzeuge zum Laseraufrauhen bekannt. Die DE 10 2016 103 578 A1 beschreibt eine Vorrichtung zum Aufrauen von Substraten. DE 10 2017 200 080 A1 beschreibt ein Laserwerkzeug mit rotierbarer Linse. DE 10 2009 024 957 B3 beschreibt ein Werkzeug zum Laserauftragschweißen.

Diese aufgerauten Oberflächen werden nach dem Aufrauen üblicherweise thermisch beschichtet. Ein derartiges Aufrauen wird bspw. zur Verbesserung der Haftzugsfestigkeit einer auf die aufgerauten Oberflächen aufgetragenen metallischen oder nicht-metallischen (Spritz-)Schicht verwendet. Ein Beispiel hierfür ist die Anwendung in Zylinderbohrungen in Verbrennungsmotoren. Die thermischen Spritzschichten sind reibungs- und verschleißarm und erlauben die Optimierung von Verbrennungsmotoren, besonders hinsichtlich der Verringerung der Abgasemissionen. Nach dem Aufrauen und dem thermischen Beschichten erfolgt üblicherweise eine Honoperation, die teilweise in mehreren Schritten durchgeführt wird und welche die spritzraue Oberfläche in eine tribologisch geeignete Topografie verändern kann.

Ein erster Aspekt der vorliegenden Erfindung ist in Anspruch 1 definiert.

Die Erfindung betrifft eine Vorrichtung zur Laserbearbeitung, die insbesondere dem Laseraufrauen dient, wobei die Laserbearbeitung auf Oberflächen mehrerer zueinander beabstandeter Werkstücköffnungen, welche insbesondere die Oberflächen von Zylinderbohrungen sein können, gerichtet ist. Eine derartige Vorrichtung umfasst mindestens eine Arbeitsstation. Die Arbeitsstation kann derart ausgebildet sein, dass sie eine Werkstückhalterung umfasst. Die Werkstückhalterung kann in der Arbeitsstation angeordnet sein oder für die Bearbeitung in der Arbeitsstation anordenbar sein. Mit "anordenbar" ist dabei gemeint, dass sie, beispielsweise mittels eines Rundtisches, in die Arbeitsstation bewegbar ist, wobei das zu arbeitende Werkstück auf dem Rundtisch bzw. in der auf dem Rundtisch angeordneten Werkstückhalterung angeordnet sein kann. Während der eigentlichen Bearbeitung befindet sich die Werkstückhalterung jedenfalls in der Arbeitsstation. Andere Arten von Transfereinrichtungen, die Werkstückhalterungen aufweisen können oder diese in die Arbeitsstation bewegen können, sind denkbar. Auf die Transfereinrichtung wird nachfolgend noch mit Bezug auf den zweiten Aspekt der Erfindung eingegangen. Die einzelnen, mehrere oder alle Merkmale, die im Zusammenhang mit dem zweiten Aspekt der Erfindung erläutert werden sind jeweils auch als mögliche weitere Ausbildungen des ersten Aspekts der vorliegenden Erfindung zu sehen. Der (eine Transfereinrichtung bildende) Rundtisch kann als konventioneller Drehtisch bzw. Rundtisch ohne Hubfunktion ausgebildet sein, er kann jedoch auch als Hubdrehtisch ausgebildet sein. Mit einem Rundtisch ist im vorliegenden Sinn ein Drehtisch gemeint, der durch Rotationsbewegung um eine Rund- oder Drehtischachse einen Werkstücktransport realisieren kann. Der Werkstücktransport erfolgt dabei üblicherweise auf einer Kreisbahn, wobei jedoch auch eine zusätzliche translatorische Bewegung überlagert sein kann, so dass sich eine von einer idealen Kreisbahn abweichende Werkstückbewegung beim Transport mittels des Rundtisches ergeben kann. Ein Rundtisch im vorliegenden Sinn kann Tischartig ausgebildet sein, beispielsweise mit einer (bspw. runden) flächigen Auflagefläche, er kann jedoch auch eine andersartig (bspw. kreuzartige) ausgebildete Struktur mit vorgesehenen Werkstückpositionen (bspw. Werkstückaufnahmen, bspw. mit Indexiermitteln, die Indexierstifte sein können) aufweisen.

Die eben beschriebene Arbeitsstation umfasst des Weiteren ein Laserbearbeitungsmodul. Dieses Laserbearbeitungsmodul weist eine Modulachse auf. Mit der Modulachse ist dabei vorliegend eine Achse des Laserbearbeitungsmoduls gemeint. Typischerweise ist das Laserbearbeitungsmodul länglichen Richtung entlang der Modulachse ausgebildet.

Des Weiteren weist die Arbeitsstation eine Positioniereinrichtung auf. Die Positioniereinrichtung ist ausgebildet und angeordnet um eine Relativbewegung zwischen einem in der Arbeitsstation zur Bearbeitung angeordneten Werkstück und dem Laserbearbeitungsmodul zu bewirken. Die Positioniereinrichtung kann dabei beispielsweise das Laserbearbeitungsmodul bewegen. Eine derartige Positioniereinrichtung kann beispielsweise über eine Schlitten- oder Kreuzschlittenanordnung realisierbar sein. Denkbar ist auch, dass die Positioniereinrichtung die Position des Werkstücks verändert. Beispielsweise kann eine Positioniereinrichtung durch eine Hubfunktion eines bereits oben genannten Hubdrehtisches realisiert sein. Denkbar ist auch eine beispielsweise translatorisch in der Arbeitsstation bewegbare Werkstückhalterung. Die Positioniereinrichtung kann auch Mittel zum Bewegen des Laserbearbeitungsmoduls sowie des Werkstücks bzw. einer das Werkstück haltenden Werkstückhalterung aufweisen. Die Relativbewegung zwischen Werkstück und Laserbearbeitungsmodul kann entsprechend durch eine Bewegung beider Komponenten realisiert sein. Vorzugsweise ist eine translatorische Relativbewegung entlang einer horizontal und/oder einer vertikal erstreckten Bewegungsachse möglich.

Das Laserbearbeitungsmodul weist eine Strahlführungsoptik auf. Die Strahlführungsoptik ist ausgebildet, um einen Laserstrahl zur Bearbeitung der Oberfläche in einer Ausleitungsrichtung auf die zu bearbeitende Oberfläche zu leiten. Mit der Ausleitungsrichtung ist dabei die Richtung gemeint, mit der der Laserstrahl das Laserbearbeitungsmodul verlässt. Die Ausleitungsrichtung ist dabei gegenüber der Modulachse und einer zur Modulsachse orthogonalen Ebene geneigt angeordnet. Das Laserbearbeitungsmodul ist des Weiteren ausgebildet und angeordnet um den Laserstrahl um die Modulachse zu rotieren. Damit ist gemeint, dass der Laserstrahl in Ausleitungsrichtung um die Modulachse rotiert. Die Ausleitungsrichtung umfasst damit sämtliche Ausleitungsrichtungen des Laserstrahls in einer Mantelfläche eines Kegels bzw. Kegelstumpfs, der eine Neigung entsprechend der Ausleitungsrichtung aufweist.

Die Strahlführungsoptik weist eine Kollimatoreinheit auf, die dazu dient, den von der Strahlungsquelle kommenden Laserstrahl zu kollimieren. Die Strahlführungsoptik umfasst weiter eine Fokussiereinheit, mittels der der bereits kollimierte Laserstrahl fokussiert wird, bzw. fokussierbar ist. Die Strahlführungsoptik weist weiter eine ausleitungsrichtungsfestlegende Strahlumlenkeinrichtung auf. Die ausleitungsrichtungsfestlegende Strahlumlenkeinrichtung ist ausgebildet und angeordnet, um den Laserstrahl zur Bearbeitung der Oberfläche von einer optischen Hauptrichtung in die Ausleitungsrichtung umzulenken. Die Strahlumlenkeinrichtung ist im Strahlengang nach der Kollimatoreinheit, und insbesondere nach der Fokussiereinheit, angeordnet.

Vorzugsweise wird der Laserstrahl in Richtung der Strahlführungsoptik zunächst in die Kollimatoreinheit eingeleitet durch diese kollimiert und im kollimierten Zustand über entsprechende optische Elemente auf die Fokussiereinheit geleitet dort fokussiert und wird von dieser anschließend auf die Strahlumlenkeinrichtung geführt, welche den Laserstrahl in die Ausleitungsrichtung umlenkt, so dass der Laserstrahl ohne weitere Umlenkung aus dem Laserbearbeitungsmodul austritt. Die Strahlumlenkeinrichtung legt also die Ausleitungsrichtung des Laserstrahls fest. Nachdem der Laserstrahl durch die Strahlumlenkeinrichtung in die Ausleitungsrichtung gerichtet wurde erfolgt keine weitere Umlenkung.

Erfindungsgemäß ist nun vorgesehen, dass das Lasterbearbeitungsmodul eine Rotationseinrichtung umfasst. Diese Rotationseinrichtung ist ausgebildet, um die Strahlumlenkeinrichtung gegenüber der Kollimatoreinheit oder gegenüber der Kollimatoreinheit und der Fokussiereinheit um die Modulachse zu rotieren. Durch diese Rotation wird die Rotation des austretenden Laserstrahls um die Modulachse bewirkt. Das Laserbearbeitungsmodul umfasst im optischen Pfad vor der die ausleitungsrichtungsfestlegende Strahlumlenkeinrichtung eine weitere Strahlumlenkeinrichtung. Diese weitere Strahlumlenkeinrichtung lenkt den Laserstrahl in die optische Hauptrichtung um. Durch die vorliegende Konstruktion kann eine schlanke Bauweise des Laserbearbeitungsmoduls realisiert werden. Außerdem ergibt sich vorteilhaft, dass wenige Komponenten des Laserbearbeitungsmoduls mechanisch bewegt werden müssen. Der Verschleiß des Bearbeitungsmoduls kann reduziert werden. Die Rotationseinrichtung bzw. Strahlführungsoptik mit entsprechender Rotationseinrichtung können entlang der optischen Hauptrichtung schlank ausgebildet sein.

Erfindungsgemäß umfasst die Vorrichtung eine Rotationseinrichtung, die einen Direktantrieb umfasst. Damit ist gemeint, dass der Antrieb für die Rotationseinrichtung nicht extern ausgebildet ist und über eine Kraftübertragungseinrichtung, beispielsweise einen Keilriemen, einen Zahnriemen oder ein ähnliches Kraftübertragungsmittel auf das Laserbearbeitungsmodul übertragen wird.

Der Direktantrieb ist als Hohlwellenantrieb ausgebildet. Damit ist gemeint, dass eine Komponente des Antriebs drehfest gegenüber dem Gehäuse verbunden ist und eine weitere Komponente gegenüber dieser rotierbar angeordnet ist und beim Betrieb des Antriebs die beiden Komponenten gegeneinander rotieren, wobei die Rotation um eine Achse des Hohlwellenantriebs erfolgt und beide Teile um diese Achse herum angeordnet ist. Die Achse des Hohlwellenantriebs fällt insbesondere mit der Modulachse zusammen.

Vorzugsweise ist der Stator des Hohlwellenantriebs drehfest mit dem Gehäuse des Laserbearbeitungsmoduls verbunden. Ein Rotor des Hohlwellenantriebs ist um eine Achse des Hohlwellenantriebs (dessen Rotationsachse) herum rotierbar. Diese Rotationsachse entspricht der Modulachse. Typischerweise ist der Rotor des Hohlwellenantriebs hohl ausgeführt, so dass die Strahlführung entlang der Modulachse durch den hohlen Rotor des Hohlwellenantriebs erfolgen kann. Durch den beschriebenen Direktantrieb kann eine sehr genaue Rotation des Laserstrahls erfolgen und durch Ausbildung als Hohlwellenantrieb insbesondere mit der eben beschriebenen Ausbildung von Stator und Rotor ist eine sehr kompakte Bauweise des Laserbearbeitungsmoduls möglich, wobei die Rotation des Laserstrahls mit sehr hoher Präzision und Geschwindigkeit durchführbar ist.

Hierdurch kann die Vorrichtung sehr flexibel gestaltet werden. Bspw. können wenigstens zwei derartige Laserbearbeitungsmodule vorgesehen sein, welche wiederum zur Bearbeitung zweier Werkstücke oder wahlweise je nach Arbeitszyklus zur Bearbeitung desselben Werkstücks (bspw. unterschiedlicher Öffnungen) genutzt werden können. Dies ist insbesondere in Kombination mit der o.g. Transfereinrichtung von Vorteil, insbesondere, wenn diese je 2 Werkstücke in die Arbeitsstation bzw. deren Arbeitsraum bewegen kann. Die Kombination eines Drehtisches als vorrichtungsinternes Transfersystem bietet insbesondere in Kombination mit der eingangs und nachfolgend beschriebenen Ausbildung des Laserbearbeitungsmoduls besondere Vorteile. Das Transfersystem ermöglicht eine schnelles beschicken der Arbeitsstation in welcher wiederum über das mit der rotierenden Strahlumlenkeinrichtung ausgebildete Laserbearbeitungsmodul sehr rasch und präzise eine Bearbeitung durchgeführt werden kann. Das Laserbearbeitungsmodul weist eine geringe Trägheit auf, da nur wenige Komponenten mit geringer Masse bei der Rotation in Bewegung versetzt werden müssen. Hierdurch wird die rasche Beschickung (Transfersystem) der Arbeitsstation mit einer schnellen Bearbeitung in der Arbeitsstation kombiniert, was eine insgesamt niedrigere Taktzeit ermöglicht. Unterstützt wird dies weiter durch die Verschlusseinrichtung, die nur eine minimale Öffnungsphase benötigt, um ein Beschicken und zeitgleich (Drehbewegung des Transfersystems) ein Entladen der Arbeitsstation zu ermöglichen. Das Laserbearbeitungsmodul, die Transfereinrichtung und die Verschlusseinrichtung ergänzen sich also und sind aufeinander abgestimmt, um eine möglichst hohe Taktung der Vorrichtung mit geringen Nebenzeiten zu gewährleisten.

Da die ausleitungsrichtungsfestlegende Strahlumlenkeinrichtung gegenüber den übrigen optischen Komponenten des Systems rotiert wird, können diese starr und damit platzsparend und robust ausgebildet werden. Vorteilhaft ist, wenn von den optisch wirkenden Komponenten (Art bzw. Profil und/oder Richtung des Laserstrahls beeinflussend) lediglich die Strahlumlenkeinrichtung rotiert bzw. im Betrieb rotierbar ist. Die anderen optisch wirkenden Komponenten können starr mit dem Gehäuse des Laserbearbeitungsmoduls verbunden sein.

Die Fokussiereinheit bspw. kann drehfest mit dem Gehäuse verbunden sein, insbesondere kann die Fokussiereinheit innerhalb des Rotors angeordnet sein. Die Fokussiereinheit ist über ein sich in den Rotor erstreckendes hülsenartiges Element, das mit dem Gehäuse verbunden ist, gehalten.

Der Laserstrahl kann über eine Anschlussstelle für einen Lichtleiter in das Laserbearbeitungsmodul eingekoppelt werden bzw. einkoppelbar sein.

Vorzugsweise weist das Laserbearbeitungsmodul wenigstens zwei, insbesondere wenigstens drei Strahlumlenkeinrichtungen auf.

Mittels der ersten, die Ausleitungsrichtung festlegenden Strahlumlenkeinrichtung wird die endgültige Richtung des das Laserbearbeitungsmodul verlassenden Laserstrahls festgelegt. Die erste weitere Strahlumlenkeinrichtung lenkt den Laserstrahl von einer, insbesondere orthogonal, zur optischen Hauptrichtung geneigt liegenden Richtung, insbesondere einer Kollimatorrichtung, in der die Kollimatoreinheit den Laserstrahl kollimiert, in die optische Hauptrichtung um. Entlang der optischen Hauptrichtung trifft der Laserstrahl auf die die Ausleitungsrichtung festlegenden Strahlumlenkeinrichtung. Mittels einer zweiten weiteren Strahlumlenkeinrichtung kann der Strahl bspw. von einer Anschlussstelle her kommend umgelenkt und auf die Kollimatoreinheit geführt werden. Eine derartige Umlenkung ist jedoch optional. Der Strahl kann auch ohne vorherige Umlenkung auf die Kollimatoreinheit geführt werden. Die Stellung der Anschlussstelle für einen Lichtleiter kann hierzu entsprechend in Ihrer Position am Laserbearbeitungsmodul angepasst werden.

Die weitere Strahlumlenkeinrichtung kann als Interferenzspiegel ausgebildet sein. Die weitere Strahlumlenkeinrichtung kann entlang des Strahlengangs auf die Kollimatoreinheit folgend angeordnet sein.

Die Fokussiereinheit kann insbesondere zwischen der ersten Strahlumlenkeinrichtung und der die Ausleitungsrichtung festlegenden Strahlumlenkeinrichtung angeordnet sein.

Auf die Fokussiereinheit folgend kann eine strahlendurchlässige Dichteinheit vorgesehen sein, die das Eindringen von Verschmutzungen in das Laserbearbeitungsmodul bzw. dessen optischen Pfad mit der Kollimatoreinheit und der Fokussiereinheit verhindert.

Die als Interferenzspiegel ausgebildete weitere Strahlumlenkeinrichtung ist derart ausgebildet und angeordnet, dass sie den Laserstrahl in vorgesehener Richtung auf die weiteren optisch wirkenden Komponenten (Art und/oder Richtung des Laserstrahls beeinflussend) leitet, insbesondere auf die Fokussiereinheit und anschließend auf die die Ausleitungsrichtung festlegende Strahlumlenkeinrichtung. Durch die Ausbildung als Interferenzspiegel kann die weitere Strahlumlenkeinrichtung ein von der bearbeiteten Oberfläche kommendes optisches Signal (an von der bearbeiteten Oberfläche ausgehendes, bspw. emittiertes und/oder reflektiertes, Strahlungssignal) in Richtung einer Sensoranschlussstelle leiten. Hierzu ist sie derart angeordnet, dass der Laserstrahl in vorgesehener Richtung entlang des optischen Pfads zur Werkstückoberfläche hingeleitet wird, während ein entlang des optischen Pfads von der Werkstückoberfläche kommendes optisches Signal aus dem optischen Pfads des Laserstrahls ausgekoppelt wird und einer Sensoranschlussstelle zugeführt (bspw. über weitere optisch wirkenden Komponenten) wird.

Es kann vorgesehen sein, dass das Laserbearbeitungsmodul einen verjüngten Spindelabschnitt umfasst. Der Spindelabschnitt ist dabei üblicherweise rotationssymetrisch und länglich erstreckt oder mit anderen Worten schlank ausgebildet. Der Spindelabschnitt dient zum Einführen in die zu bearbeitende Werkstücköffnung und ist entsprechend ausgebildet. Dies ist insbesondere bei der Bearbeitung von Zylinderbohrungen vorteilhaft. Es kann dabei insbesondere vorgesehen sein, dass der Direktantrieb beabstandet zum Spindelabschnitt angeordnet ist. Diese Beabstandung bezieht sich auf eine Sicht entlang der Modulachse. Typischerweise ist der Direktantrieb oberhalb des Spindelabschnitts angeordnet. Mit oberhalb ist damit gemeint, dass der Direktantrieb des Spindelabschnitts auf der Seite der Werkstücköffnung angeordnet ist, von der der Spindelabschnitt beim Einführvorgang in die Werkstücköffnung eingeführt wurde.

Da die optische Hauptrichtung mit der Modulachse zusammenfällt ist die Strahlführungsoptik derart ausgebildet, dass der Laserstrahl teilweise entlang der Modulachse verläuft und entlang dieser auf die Strahlumlenkeinrichtung geführt ist. Insbesondere kann der Laserstrahl von der Fokussiereinheit zur Strahlumlenkeinrichtung entlang der Modulachse geführt sein. Mit anderen Worten zwischen Fokussiereinheit und Strahlumlenkeinrichtung verläuft der Laserstrahl entlang der Modulachse.

Das Laserbearbeitungsmodul umfasst einen Prozessgasströmungsweg. Dieser Prozessgasströmungsweg umfasst einen sich entlang der optischen Hauptrichtung erstreckenden Abschnitt. Dieser Abschnitt ist zwischen der ersten weiteren Strahlumlenkeinrichtung und der ausleitungsrichtungsfestlegenden Strahlumlenkeinrichtung angeordnet. Der Prozessgasströmungsweg ist derart angeordnet und ausgebildet, dass das Prozessgas das Laserbearbeitungsmodul über die Auslassöffnung des Laserstrahls verlässt und über diese auf die zu bearbeitende Stelle der Werkstückoberfläche geleitet wird. Hierzu kann die Auslassöffnung düsenartig (dem ausströmenden Prozessgas eine Richtung aufprägend) ausgebildet sein.

Bezüglich der Positioniereinrichtung kann vorgesehen sein, dass die Positioniereinrichtung eine Relativbewegung zwischen dem in der Arbeitsstation zur Bearbeitung angeordneten Werkstück und dem Laserbearbeitungsmodul bewirken kann, wobei diese Relativbewegung in einer zur Modulachse orthogonalen Ebene verläuft oder in Richtung der Modulachse verläuft, insbesondere kann die Modulachse in vertikaler Richtung verlaufen bei üblicher Ausrichtung der Vorrichtung und die Relativbewegung zwischen Werkstück und Laserbearbeitungsmodul kann entsprechend in der horizontalen und vertikalen Richtung verlaufen. Beispielsweise ist damit eine Bewegung des Laserbearbeitungsmoduls in horizontaler Richtung von einer Zylinderbohrung zur nächsten und ein Absenken des Spindelabschnitts in die jeweiligen Zylinderbohrungen hinein in vertikaler Richtung denkbar.

Die Positioniereinrichtung kann wie bereits ausgeführt eine Schlittenanordnung umfassen, insbesondere kann vorgesehen sein, dass eine Kreuzschlittenanordnung vorgesehen ist, mit der die eben beschriebenen orthogonal zueinander verlaufenden Richtungen einer Relativbewegung realisierbar sind. Insbesondere können die in orthogonal zueinander verlaufenden Richtungen durchführbaren Relativbewegungen auch überlagert (im Sinne von zeitgleich) durchführbar sein.

Das Laserbearbeitungsmodul kann direkt an der Schlittenanordnung angeordnet ausgebildet sein. Wie bereits oben ausgeführt können die einzelnen Merkmale des zweiten erfinderischen Aspekts jeweils für sich oder in verschiedenen Kombinationen auch beim ersten erfinderischen Aspekt vorgesehen sein und umgekehrt. Bei beiden Aspekten, insbesondere jedoch beim zweiten erfinderischen Aspekt kann vorgesehen sein, dass die Transfereinrichtung als Drehtisch ausgebildet ist. Die Transfereinrichtung bildet also eine Werkstückfördereinrichtung, die über eine Rotationsbewegung Werkstücke in die Arbeitsstation und aus der Arbeitsstation hinausbefördert. Die Transfereinrichtung kann mit einer plattenförmigen Fläche ausgebildet sein. Zwischen den einzelnen Werkstückaufnahmen oder vorgesehenen Werkstückpositionen kann eine Auflagefläche bestehen, die während der Drehbewegung mit rotiert.

Es kann insbesondere vorgesehen sein, dass die Transfereinrichtung als Hubdrehtisch ausgebildet ist, der neben der Drehbewegung noch zu einer entlang der Rotationsachse verlaufenden Hub- und Senkbewegung fähig ist. Der Drehtisch kann ausgebildet sein, um je Transfervorgang zeitgleich je mindestens zwei Werkstücke von der Belade- und Entladestation in die Arbeitsstation und umgekehrt zeitgleich im selben Transfervorgang je mindestens zwei Werkstücke von der Arbeitsstation in die Belade- und Entladestation zu überführen. Hierzu weist die Transfereinrichtung (bzw. der Drehtisch) typischerweise eine entsprechende Anzahl von Aufnahmen für Werkstücke (bzw. für Werkstücke vorgesehene Positionen) auf, die jeweils um 180 Grad versetzt am Drehtisch angeordnet sind. Insbesondere durch die 180 Grad versetzte Anordnung ist es in einfacher Art und Weise möglich einen zeitgleichen Ein- und Austransport von Werkstücken von Be- und Entladestation bzw. Arbeitsstation zu ermöglichen.

Die Verschlusseinrichtung kann eine öffen- und schließbare Trennwand umfassen. Der kombinierte Einsatz der Trennwand mit der Transfereinrichtung ermöglicht besonders kurze Beschickungszeiten. Die Trennwand wird geöffnet, zeitgleich beginnt die Rotationsbewegung der Transfereinrichtung. Durch diese Rotationsbewegung der Transfereinrichtung wird zeitgleich die Arbeitsstation be- und entladen. Die Trennwand kann wieder geschlossen werden, sobald die Werkstücke die Position der Trennwand passiert haben. Eine derartige Trennwand kann einen doppelwandigen Aufbau aufweisen, um somit dem aktiven Laserschutz zu genügen. Dabei kann ein Hohlraum durch eine Außenwand durch diese doppelwandige Außenwand begrenzt sein und die Trennwand kann weiter eine Sensoreinheit umfassen, die ausgebildet und angeordnet ist um zu detektieren, wenn Laserstrahlung des Laserbearbeitungsmoduls in den Hohlraum eindringt. Damit kann die Verschlusseinrichtung quasi erfassen sobald ein den Hohlraum umgebender Teil der Außenwand durch den Laser beschädigt ist und Laserstrahlung in den Innenraum eindringt bevor die weitere den Hohlraum begrenzende Außenwand durchbrochen ist und Laserstrahlung aus der Arbeitsstation bzw. dem Arbeitsraum an die Umgebung dringen kann. Entsprechend kann dann eine Notabschaltung des Laserbearbeitungsmoduls vorgenommen werden. Dies erhöht die Sicherheit der erfindungsgemäßen Vorrichtung.

Der Arbeitsraum kann mit einer Absaugeinrichtung ausgebildet sein. Die Absaugeinrichtung kann insbesondere mehrere Absaugöffnungen, die im Arbeitsraum angeordnet sind umfassen. Insbesondere können in einer Bearbeitungsposition des bearbeiteten Werkstücks im Arbeitsraum der Arbeitsstation unterhalb des bearbeiteten Werkstücks Absaugöffnungen angeordnet sein. Das Laserbearbeitungsmodul kann von oben kommend in die Werkstücköffnungen eingeführt werden und Laserbearbeitungen vornehmen. Die Absaugeinrichtung bzw. Absaugöffnungen können einen Luft- oder Gaststrom von der Oberseite der bearbeiteten Öffnung in die Absaugeinrichtung hinein erzeugen und anfallende Verschmutzungen im Zuge des Laserbearbeitungsprozesses effizient absaugen. Entsprechend werden auch Gasverunreinigungen abgesaugt, die eine weitere Laserbehandlung behindern bzw. erschweren könnten oder deren Qualität beeinträchtigen könnten.

Es kann weiter vorgesehen sein, dass die Vorrichtung wenigstens ein von dem Arbeitsraum der Arbeitsstation getrenntes Strahlquellenabteil umfasst. In dem Strahlquellenabteil kann eine Strahlungsquelle für den zur Bearbeitung vorgesehenen Laserstrahl angeordnet sein. Ein Lichtleiter kann vorgesehen sein, um den Laserstrahl von der Strahlungsquelle in den Arbeitsraum bzw. zum Laserbearbeitungsmodul an der Arbeitsstation zu leiten. Es kann also vorgesehen sein, dass eine Strahlquelle für das Laserbearbeitungsmodul räumlich getrennt von der Arbeitsstation in einem separaten Strahlquellenabteil angeordnet ist. Hierdurch wird die Betriebssicherheit der Anlage erhöht. Auch lässt sich hierdurch die Strahlquelle vor Verschmutzungen leichter schützen. Der Arbeitsraum kann hierdurch auch mit geringem Volumen ausgebildet werden, so dass eine Absaugung von verunreinigter Luft einfach und effizient möglich ist.

Die Erfindung betrifft auch ein Verfahren wie es in Anspruch 15 definiert ist.

Ein derartiges Verfahren betrifft damit ein Verfahren zur Laserbearbeitung, insbesondere den Laseraufrauen von Werkstücköffnungen, wobei derartige Werkstücköffnungen insbesondere Oberflächen von Zylinderbohrungen sein können. Das entsprechende Verfahren wird unter Verwendung einer Vorrichtung zur Laserbearbeitung durchgeführt. Eine derartige Vorrichtung zur Laserbearbeitung kann bspw. eine Vorrichtung gemäß des ersten oder des zweiten erfinderischen Aspekts sein oder gemäß deren Oberbegriffen.

Das Verfahren umfasst die Schritte Positionieren eines zu bearbeiteten Werkstücks in einer Arbeitsstation der Vorrichtung;

Positionieren eines Spindelabschnitts eines Laserbearbeitungsmoduls der Vorrichtung in der zu bearbeiteten Werkstücköffnung des Werkstücks, das sich in der Arbeitsstation befindet.

Mit dem Positionieren des zu bearbeiteten Werkstücks kann dabei der über eine Drehbewegung durchgeführte Transfervorgang gemeint sein, der mit oben beschriebener Transfervorrichtung durchgeführt wird. Das Positionieren des Spindelabschnitts eines Laserbearbeitungsmoduls in der Werkstücköffnung kann beispielsweise ein Einfahren durch Bewegung des Laserbearbeitungsmoduls sein, vorzugsweise wird das Laserbearbeitungsmodul hierzu in vertikaler Richtung, insbesondere abwärts, bewegt. Es ist ebenso denkbar, dass das Werkstück quasi auf den Spindelabschnitt des Laserbearbeitungsmoduls aufgeschoben wird. Ebenso ist eine überlagerte Bewegung beider Komponenten denkbar. Bestrahlen der Oberfläche der bearbeiteten Werkstücköffnung mittels eines über das Laserbearbeitungsmoduls in die Werkstücköffnung geleiteten, insbesondere kontinuierlichen, Laserstrahls.

Der Laserstrahl ist bei diesem Bestrahlen der Oberfläche um die Modulachse rotiert. Die Rotation erfolgt vorzugsweise mit konstanter Winkelgeschwindigkeit. Die Winkelgeschwindigkeit kann jedoch auch variabel sein.

Bei der Durchführung des Verfahrens wird ein Laserbearbeitungsmodul eingesetzt, das eine Strahlführungsoptik umfasst, die ausgebildet ist, um einen Laserstrahl zur Bearbeitung der Oberfläche in einer Ausleitungsrichtung, die gegenüber der Modulachse und einer zur Modulachse orthogonalen Ebene geneigt ist, auf die zu bearbeitende Oberfläche zu leiten.

Das erfindungsgemäße Verfahren kennzeichnet sich dadurch, dass zur Rotation des Laserstrahls eine Strahlumlenkeinrichtung des Laserbearbeitungsmoduls, die den Lasterstrahl zur Bearbeitung der Oberfläche in die Ausleitungsrichtung umlenkt, gegenüber einer Kollimatoreinheit des Laserbearbeitungsmoduls zur Kollimation des von der Strahlungsquelle kommenden Laserstrahls oder gegenüber der Kollimatoreinheit und einer Fokussiereinheit des Laserbearbeitungsmoduls, die zur Fokussierung des kollimierten Laserstrahls ausgebildet ist, um die Modulachse rotiert, um die Rotation des austretenden Laserstrahls um die Modulachse zu bewirken.

Der Rotationsbewegung der Strahlumlenkeinrichtung kann eine translatorische Relativbewegung zwischen Werkstück und Strahlumlenkeinrichtung des Laserbearbeitungsmoduls überlagert sein. Die translatorische Relativbewegung kann durch eine Bewegung des Laserbearbeitungsmoduls, des Werkstücks oder beides, bzw. allgemein durch eine Relativbewegung zwischen Werkstück und Laserbearbeitungsmodul realisiert sein. Die translatorische Relativbewegung ist entsprechend entlang der Richtung der Modulachse gerichtet. Insbesondere ist es denkbar, dass das Laserbearbeitungsmodul translatorisch entlang der Modulachse (mit entsprechend vorgesehener Geschwindigkeit) in die Werkstücköffnung eingeführt wird und parallel zu dieser Einführbewegung die Rotation des Lasers um die Modulachse überlagert wird und damit (mit kontinuierlicher oder schrittweiser translatorischer Bewegung) die Oberfläche des Werkstücks bestrahlt wird.

Es kann vorgesehen sein, dass die translatorische Bewegung kontinuierlich erfolgt. Hierdurch ergibt sich eine Art spiralförmiger, abgefahrener Pfad des Lasers. Die translatorische Bewegung kann jedoch auch schrittweise erfolgen, so dass quasi stets eine 360 Grad Rotation der Strahlumlenkeinrichtung erfolgt und dann in einem Schritt der Laser weiter einwärts in die Werkstücköffnung bewegt wird. Hierdurch kann sich quasi eine ringförmige abgetastete Bahn der Oberfläche ergeben. Der Laserstrahl muss dabei nicht die gesamten 360 Grad der Oberfläche abtasten.

Es ist erfindungsgemäß vorgesehen, dass das Laserbearbeitungsmodul eine Rotationseinrichtung umfasst, die ausgebildet ist, um die Strahlumlenkeinrichtung gegenüber der Kollimatoreinrichtung oder gegenüber der Kollimatoreinrichtung und der Fokussiereinheit um die Modulachse zu rotieren. Durch diese Rotation wird die Rotation des austretenden Laserstrahls um die Modulachse bewirkt. Die Rotationseinrichtung kann einen Direktantrieb umfassen, der während des Bearbeitungsvorgangs in Richtung der Modulachse gesehen außerhalb, insbesondere oberhalb bzw. in Einführrichtung des Spindelabschnitts des Laserbearbeitungsmoduls vor der Werkstücköffnung des zu bearbeitenden Werkstücks angeordnet ist. Anders ausgedrückt, das Laserbearbeitungsmodul wird während des Bearbeitungsprozesses mit dem Spindelabschnitt jedoch nicht bis zum Direktantrieb in die Werkstücköffnung eingefahren.

Es kann vorgesehen sein, dass im Rahmen der erfindungsgemäßen Verfahren dem Schritt der Laserbearbeitung nachfolgend ein Abbürsten der bearbeiteten Oberfläche durchgeführt wird, um bspw. durch Verschmutzungen verursachte übermäßige Unebenheiten der Oberfläche zu beseitigen. Statt oder zusätzlich kann zu diesem Zweck auch ein Abblasen erfolgen. Hierzu können die erfindungsgemäßen Vorrichtungen auch eine entsprechende Abbürst-station bzw. Abblas-station umfassen, die räumlich von der Arbeitsstation getrennt angeordnet ist. Vorgesehen kann insbesondere sein, dass Werkstücke der Abbürst-station und/oder Abblas-station über eine Werkstücktransporteinrichtung der Vorrichtung von der Belade- und Entladestation aus zuführbar sind.

Bei den erfindungsgemäßen Verfahren kann zeitgleich zur Laserbearbeitung die Durchführung einer Überwachung des Bearbeitungsprozesses vorgesehen sein. Für diese Überwachung kann ein von der bearbeiteten Oberfläche kommendes optisches Signal zunächst entlang des optischen Pfads des zur Bearbeitung genutzten Lasers in dem Laserbearbeitungsmodul geführt sein und mittels einer Strahlumlenkeinrichtung, die insbesondere als Interferenzspiegel ausgebildet sein kann, aus dem optischen Pfads des Laserstrahls ausgekoppelt werden.

Dieses ausgekoppelte Signal kann dann einer Sensoranschlussstelle zugeführt werden.

Bei den erfindungsgemäßen Verfahren erfolgt das Positionieren des zu bearbeitenden Werkstücks in der Arbeitsstation der Vorrichtung in einem Transfervorgang einer Transfereinrichtung, wobei in dem Transfervorgang zeitgleich mittels einer Drehbewegung der Transfereinrichtung ein bereits bearbeitetes Werkstück aus der Arbeitsstation entnommen wird.

Es kann vorgesehen sein, dass in dem Transfervorgang je zwei Werkstücke in die Arbeitsstation hinein und aus dieser hinausbefördert werden. Beim Bestrahlen der Oberfläche der zu bearbeitenden Werkstücköffnung kann je Werkstück eine Werkstücköffnung mittels je eines Laserbearbeitungsmoduls zeitgleich bearbeitet werden. Es ist auch möglich, dass zunächst zeitgleich in einem Werkstück wenigstens zwei Werkstücköffnungen mit zwei unterschiedlichen Laserbearbeitungsmodulen bearbeitet werden und anschließend weitere Werkstücköffnungen mittels der Laserbearbeitungsmodule bearbeitet werden, diese weiteren Werkstücköffnungen können bspw. zwei Werkstücköffnungen in dem anderen Werkstück sein.

Bei den erfindungsgemäßen Verfahren ist vorgesehen, dass eine Verschlusseinrichtung, die den Arbeitsraum räumlich von einer Belade- und Entladestation trennt, zur Durchführung des Transfervorgangs geöffnet wird. Diejenigen Werkstücke, welche die Arbeitsstation im Transfervorgang verlassen, und die Werkstücke, welche im Transfervorgang in die Arbeitsstation bewegt werden, passieren die Verschlusseinrichtung räumlich gesehen zeitgleich. Die Verschlusseinrichtung wird anschließend geschlossen, so dass der Arbeitsraum räumlich von der Belade- und Entladestation getrennt ist.

Es ist auch möglich eine wandartige Verschlusseinrichtung durch eine auf dem Transfereinrichtung bildenden Rundtisch vorzusehen, die durch die Drehung des Rundtischs quasi zunächst in eine offene Stellung schwenkt und bei Beendigung der Drehung um 180° in umgekehrter Position als im Ausgangszustand die Arbeitsstation bzw. den Arbeitsraum wieder von der Belade- und Entladestation trennt. Bspw. kann hier eine senkrecht auf dem Drehtisch bzw. Rundtisch angeordnete Wand zwischen zwei sich gegenüberliegend angeordneten Werkstückaufnahmen des Rund- bzw. Drehtischs vorgesehen sein.

Bei den erfindungsgemäßen Verfahren kann vorgesehen sein, dass wenigstens ein Werkstück mit mehreren zu bearbeitenden Öffnungen mittels des Lasers bearbeitet wird, dabei können während der Laserbearbeitung die momentan nicht bearbeiteten Öffnungen mittels einer dem verwendeten Laserbearbeitungsmodul zugeordneten Blende abgedeckt werden.

Das Laserbearbeitungsmodul kann wenigstens eine erste Sperrgaseinrichtung bzw. einen ersten Sperrgasströmungsweg umfassen, die einen Sperrgasauslass, der im Bereich der Auslassöffnung des Laserstrahls jedoch zu dieser beabstandet angeordnet ist, aufweist. Der Sperrgasauslass kann insbesondere am Spindelabschnitt angeordnet sein. Der Sperrgasauslass kann insbesondere an der die Auslassöffnung umfassenden Hälfte des Spindelabschnitts angeordnet sein. Der Sperrgaseinlass kann für diesen ersten Sperrgasströmungsweg am Gehäuse des Laserbearbeitungsmoduls entlang der Modulachse gesehen beabstandet zu der Rotationseinrichtung (Direktantrieb) angeordnet sein, insbesondere dem Spindelabschnitt gegenüberliegend (Rotationseinrichtung ist entlang der Modulachse gesehen zwischen Sperrgaseinlass und Sperrgasauslass angeordnet). Der Sperrgasauslass kann insbesondere am Spindelabschnitt zwischen einem rotierenden und einem gegenüber dem Gehäuse drehfesten Teil des Spindelabschnitts angeordnet sein. Der Sperrgasauslass kann in Umfangsrichtung kreisförmig umlaufend ausgebildet sein. Der erste Sperrgasströmungsweg kann insbesondere auch derart ausgebildet sein, dass das Sperrgas durch den Spalt zwischen Rotor und Stator des Hohlwellenantriebs der Rotationseinrichtung strömt.

Das Laserbearbeitungsmodul kann alternativ oder zusätzlich auch mit einer zweiten Sperrgaseinrichtung bzw. einem zweiten Sperrgasströmungsweg ausgebildet sein (die Begriffe "erste" und "zweite" werden hier lediglich zur Unterscheidung der beiden Sperrgasströmungswege verwendet und sollen keinen der Sperrgasströmungswege als Bedingung für den anderen beschreiben. Vorzugsweise weißt das Laserbearbeitungsmodul jedoch beide hier beschriebenen Sperrgasströmungswege auf.).

Der Anschluss der zweiten Sperrgaseinrichtung (zweiter Sperrgaseinlass) kann in einem Abschnitt des Gehäuses angeordnet sein, in dem die Kollimatoreinheit angeordnet ist. Dieser Abschnitt des Gehäuses kann gesondert zu dem Abschnitt des Gehäuses ausgebildet sein, der die Rotationseinrichtung (Direktantrieb) umfasst. Dieser Abschnitt kann insbesondere in radialer Richtung länglich erstreckt ausgebildet sein. Der zweite Sperrgasströmungsweg kann insbesondere den optischen Pfad im Bereich der Kollimatoreinheit, insbesondere von der Anschlussstelle für die Laserquelle bis zur Kollimatoreinheit sowie den optischen Pfad von der Kollimatoreinheit bis zur Fokussiereinheit umfassen. Es kann vorgesehen sein, dass das Sperrgas (der zweiten Sperrgaseinrichtung) das hülsenartige Element, in dem die Fokussiereinheit gehalten ist, von seiner Innenseite her befüllt.

Das Sperrgas wird bei den erfindungsgemäßen Verfahren derart in das Laserbearbeitungsmodul eingeleitet, dass es gegenüber der Atmosphäre in Überdruck steht, so dass an eventuellen Undichtigkeitsstellen sowie am Auslass des ersten Sperrgasströmungswegs stets Sperrgas nach außen dringt und ein Eindringen von Verunreinigungen in das Laserbearbeitungsmodul verhindert wird.

Die bisher beschriebenen Sperrgasströmungswege sind fluidisch voneinander getrennt und weisen jeweils ihren eigenen Einlass auf. Es ist denkbar, dass die beiden Sperrgasströmungswege miteinander fluidisch verbunden sind und insbesondere einen einzigen gemeinsamen Einlass aufweisen.

Das Laserbearbeitungsmodul umfasst auch einen Prozessgasanschluss sowie einen Prozessgasströmungsweg. Insbesondere kann der Einsatz eines Prozessgases vorgesehen sein, wenn das Laserbearbeitungsmodul ohne Dichteinheit ausgebildet ist. Das Prozessgas wird in das Laserbearbeitungsmodul eingeleitet. Der Prozessgasströmungsweg ist derart ausgebildet, dass das Prozessgas entlang der Außenseite des hülsenartigen Elements, das der Halterung der Fokussiereinheit dient, strömt.

Das Prozessgas strömt erfindungsgemäß Richtung Auslassöffnung und verlässt das Laserbearbeitungsmodul über die Auslassöffnung. Vorzugsweise ist die Auslassöffnung derart konfiguriert, dass sie eine Art Düse bildet, die den austretenden Strahl des Prozessgases auf die durch den Laserstrahl bearbeitete Stelle der Werkstückoberfläche leitet. Das Prozessgas umgibt den Laserstrahl und kann damit als eine Art Schutzgas bei der Bearbeitung der Oberfläche dienen.

Das Laserbearbeitungsmodul kann derart ausgebildet sein, dass der Prozessgasströmungsweg über eine Dichtung von dem ersten Sperrgasströmungsweg getrennt ist. Die Dichtung kann insbesondere zwischen einem feststehenden Teil des Gehäuses und einem durch die Rotationseinrichtung rotierbaren Teil des Laserbearbeitungsmoduls angeordnet sein.

Prozessgas und Sperrgas können erfindungsgemäß, insbesondere bei den erfindungsgemäßen Verfahren, jeweils Stickstoff sein. Das Sperrgas kann auch gereinigte Druckluft sein.

Der Laserbearbeitung nachgeordnet kann eine optische oder taktile Oberflächennachmesseinrichtung sein, welche das Bearbeitungsergebnis durch eine Messung prüft oder auch bei Abweichungen von der Zielqualität Feed-Back-Funktionen auf die Bearbeitung nachfolgender Teile ausübt, mit der die Bearbeitungsparameter optimiert werden.

Es kann vorgesehen sein, dass die Verschlusseinrichtung über die Drehbewegung der Transfereinrichtung geöffnet und geschlossen wird. Es kann vorgesehen sein, dass die der Arbeitsstation zugewandte Seite der die Verschlusseinrichtung bildenden Trennwand sich bei jedem Transfervorgang ändert. Es kann vorgesehen sein, dass die Verschlusseinrichtung eine auf dem Drehtisch fest angeordnete Trennwand umfasst.

Weitere Details und Einzelheiten der vorliegenden Erfindungen werden nachfolgend in Bezug auf die Zeichnung erläutert. Dabei zeigen:
Figur 1 eine perspektivische Darstellung einer erfindungsgemäßen Vorrichtung zur Laserbearbeitung, wobei ein Gehäuse der Vorrichtung nicht dargestellt ist;
Figur 2 eine Schnittdarstellung durch eine schematisch dargestellte erfindungsgemäße Vorrichtung;
Figur 3 eine Draufsicht auf eine schematisch dargestellte erfindungsgemäße Vorrichtung, wobei das Gehäuse der Vorrichtung nur teilweise dargestellt ist;

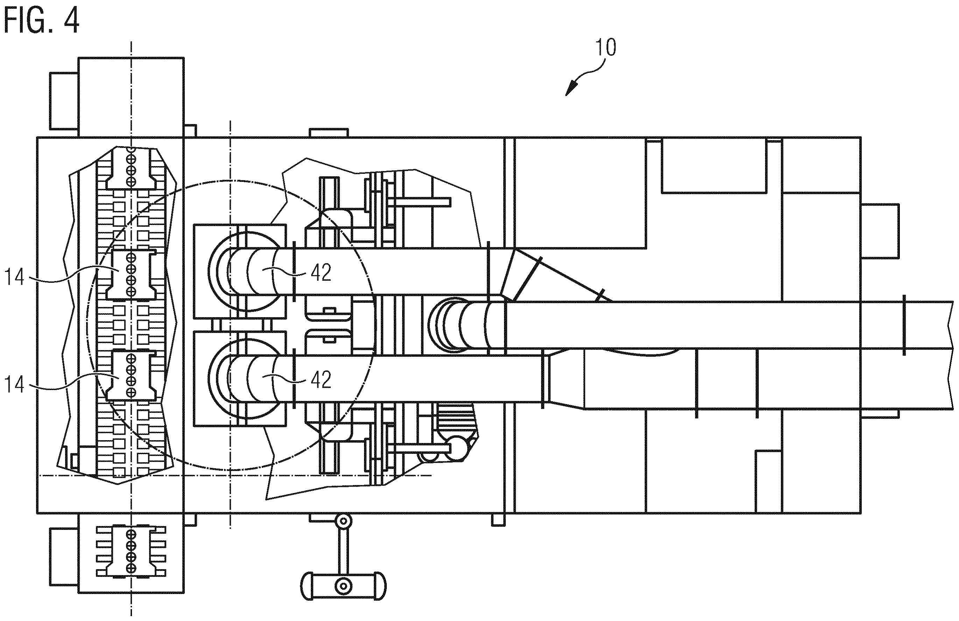

Figur 4 eine Draufsicht auf das Gehäuse der Vorrichtung mit teilweisen Durchbrüchen durch das Gehäuse;
Figur 5 ein Laserbearbeitungsmodul, wie es Anwendung in der erfindungsgemäßen Vorrichtung findet;
Figur 6 eine Schnittdarstellung durch eine schematisierte Darstellung des Laserbearbeitungsmoduls aus Figur 5;
Figur 7 eine schematisierte Darstellung des Strahlengangs des Laserbearbeitungsmoduls aus Figur 5 und 6;
Figur 8 eine Schnittdarstellung entsprechend Figur 6 in der eine erste Sperrgaseinrichtung bzw. deren Sperrgasströmung illustriert ist;
Figur 9 eine Schnittdarstellung entsprechend Figur 6 in der eine zweite Sperrgaseinrichtung bzw. deren Sperrgasströmung illustriert ist;
Figur 10 eine Schnittdarstellung entsprechend Figur 6 in der ein Prozessgasströmungsweg illustriert ist;
Figur 11 eine schematisierte Darstellung einer Trennwand; und
Figur 12 eine schematisierte Darstellung einer alternativen Trennwand.

In den Figuren tragen sich entsprechende Teile und Bereiche gleiche Bezugszeichen.

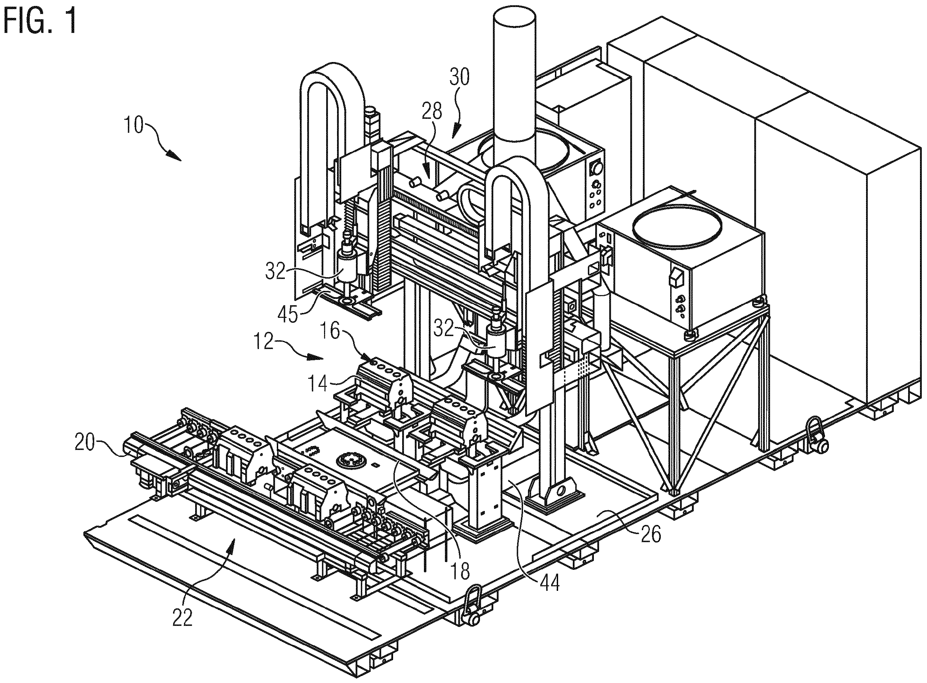

Figur 1 zeigt eine schematische perspektivische Darstellung einer Vorrichtung 10 zur Laserbearbeitung. Vorliegend ist die Vorrichtung zum Laseraufrauen von Oberflächen mehrerer zueinander beabstandeter Werkstücköffnungen, im vorliegenden Fall Zylinderbohrungen, ausgebildet. Die Vorrichtung umfasst eine Arbeitsstation 12 in der zu bearbeitende Werkstücke 14, die vorliegend durch Zylinderblöcke mit mehreren Zylinderbohrungen 16 gebildet sind, einer Laserbearbeitung unterzogen werden können.

Die zu bearbeitenden Werkstücke werden der Arbeitsstation 12 mittels einer Transfereinrichtung 18 zugeführt. Die Transfereinrichtung 18 ist vorliegend in Form eines Drehtisches ausgebildet.

Die Transfereinrichtung 18 ist derart ausgebildet und angeordnet, dass sie Werkstücke 14, welche über einen Bandförderer 20 in eine Be- und Entladestation 22 transportiert werden, durch eine Drehbewegung in einem Transfervorgang von der Be- und Entladestation 22 in die Arbeitsstation 12 überführen können. Zeitgleich können mittels der Transfereinrichtung 18 im gleichen Transfervorgang Werkstücke 14 (die bereits bearbeitet wurden) gleichzeitig aus der Arbeitsstation 12 in die Be- und Entladestation 22 bewegt werden.

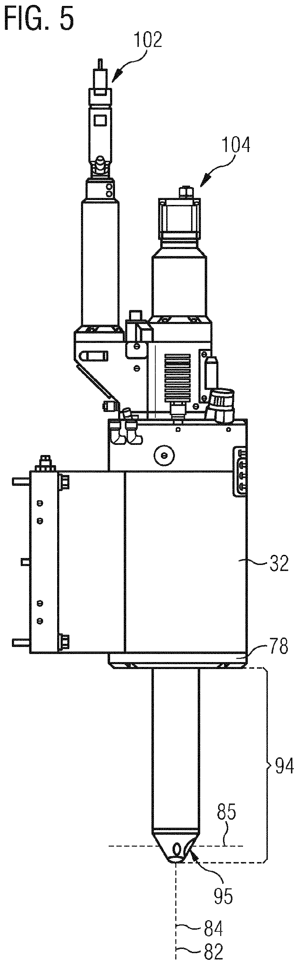

Vorliegend ist die Vorrichtung 10 ohne ein üblicherweise vorhandenes Gehäuse 24 dargestellt. Die Vorrichtung 10 umfasst ein Maschinenbett 26. Neben dem Maschinenbett 26 umfasst die Vorrichtung weiter eine Positioniereinrichtung 28, welche vorliegend als Schlittenanordnung 30 (vorliegend eine Kreuzschlittenanordnung) ausgebildet ist. An der Schlittenanordnung 30 beziehungsweise der Positioniereinrichtung 28 sind zwei Laserbearbeitungsmodule 32 angeordnet. Das Laserbearbeitungsmodul 32 und sein Aufbau wird nachfolgend noch im Zusammenhang mit den Figuren 5 bis 7 im Detail erläutert.

Mittels der Positioniereinrichtung 28 ist eine Relativbewegung zwischen dem beziehungsweise den Laserbearbeitungsmodulen 32 und den entsprechenden Werkstücken 14 bewirkbar. Vorliegend wird hierzu das Laserbearbeitungsmodul 32 bewegt, während die Werkstücke 14 in ihrer Position gegenüber dem Maschinenbett 26 verbleiben.

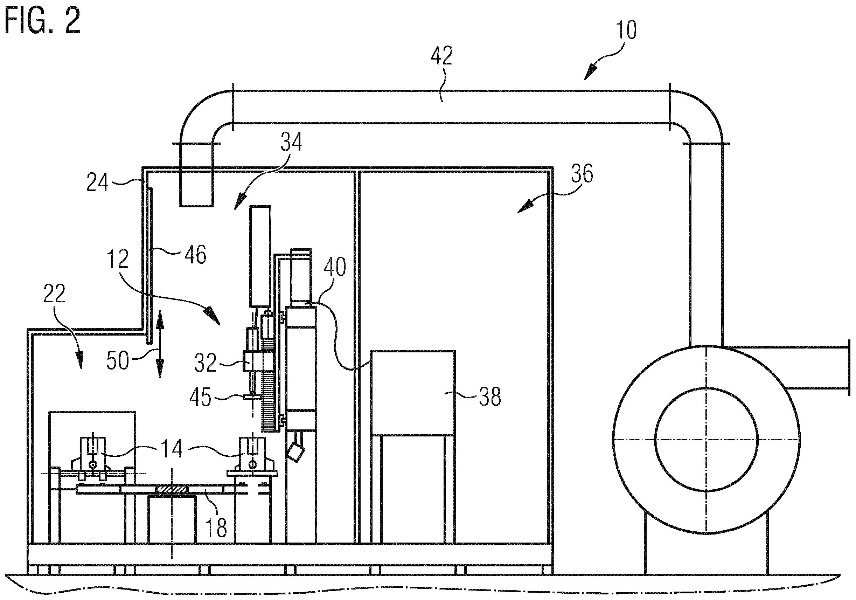

Figur 2 zeigt die Vorrichtung 10 aus Figur 1 in einer schematisierten seitlichen Schnittansicht. In Figur 2 ist das Gehäuse 24 schematisch dargestellt. Das Gehäuse definiert einen um die Arbeitsstation angeordneten Arbeitsraum 34. Die Vorrichtung 10 umfasst neben dem Arbeitsraum 34 weiter ein von dem Arbeitsraum 34 getrenntes Strahlungsquellenabteil 36. In dem Strahlungsquellenabteil 36 ist eine Strahlungsquelle 38 zur Bereitstellung des für die Bearbeitung vorgesehenen Laserstrahls, welcher in das Laserbearbeitungsmodul 32 eingekoppelt wird, angeordnet. Die Strahlungsquelle 38 ist über einen Lichtleiter 40 mit dem Laserbearbeitungsmodul 32 zur Einkopplung des Laserstrahls verbunden.

Die Vorrichtung 10 weist eine erste Absaugeinrichtung 42 auf, die generell den Arbeitsraum 34 entlüftet. Zusätzlich weist die Vorrichtung 10 je Laserbearbeitungsmodul 32 eine zweite beziehungsweise mehrere zweite Absaugeinrichtungen 44 auf, die jeweils eine Absaugöffnung unterhalb der jeweils zu bearbeitenden Werkstücköffnungen aufweisen. Die Laserbearbeitungsmodule 32 weisen jeweils eine Blendeneinrichtung 45 auf, die derart ausgebildet ist, dass sie etwaige Werkstücköffnungen, die beabstandet zur für die Bearbeitung vorgesehenen Öffnung angeordnet sind, verschließen kann. Dabei ist das jeweilige Laserbearbeitungsmodul 32 relativ zu der entsprechenden Blendeneinrichtung 45 verfahrbar. Die Blendeneinrichtung 45 kann auf den Zylinderblock 14 aufgelegt werden und das Laserbearbeitungsmodul 32 durch eine Öffnung in der Blendeneinrichtung 45 in das Werkstück bzw. den Zylinderblock 14 bzw. des Zylinderbohrung 16 eingefahren werden.

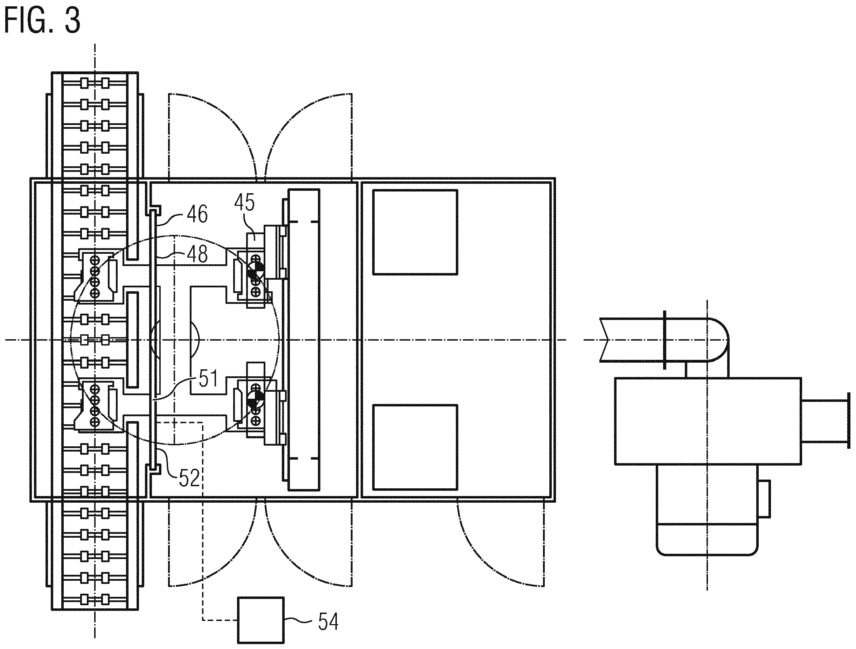

Wie in den Figuren 2 und 3 gut erkennbar ist, weist die Vorrichtung 10 eine Verschlusseinrichtung 46 auf, welche eine öffen- und schließbare Trennwand 48 umfasst. Diese kann zum Öffnen und Schließen vertikal oder horizontal bewegt werden. Vorliegend ist die Trennwand 48 in vertikaler Richtung verfahrbar ausgebildet, was durch den Doppelpfeil mit dem Bezugszeichen 50 in Figur 2 angedeutet ist.

Mittels der Verschlusseinrichtung 46 beziehungsweise der öffen- und schließbaren Trennwand ist die Arbeitsstation 12 beziehungsweise der Arbeitsraum der Arbeitsstation 12 von der Be- und Entladestation 22 trennbar. Dabei ist mit trennbar eine strahlungssichere Trennung gemeint, so dass vom Laserbearbeitungsmodul 32 ausgehende Laserstrahlen vom Arbeitsraum her nicht in die Be- und Entladestation 22 dringen können, falls beispielsweise das Laserbearbeitungsmodul 32 versehentlich eingeschaltet wird, ohne dass ein Werkstück 14 vorhanden ist.

Zu diesem Zweck ist es vorteilhaft, wenn die Trennwand 48 und andere Wände einen doppelwandigen Aufbau aufweisen. Bei diesem doppelwandigen Aufbau kann ein Hohlraum 51 innerhalb der Trennwand 46 durch eine Außenwand 52 begrenzt sein. Die Trennwand 46 kann weiter eine Sensoreinheit 54 umfassen, die in Figur 3 lediglich symbolisch dargestellt ist und ausgebildet und angeordnet ist, um zu detektieren, wenn Laserstrahlung des Lasers des Laserbearbeitungsmoduls 32 in den Hohlraum 51 der Trennwand 48 eindringt.

Die Sensoreinheit 54 kann also detektieren, falls die Außenwand der Trennwand 46 durch den Laserstrahl durchbrochen wird und entsprechend kann eine Notabschaltung des Laserbearbeitungsmoduls 32 vorgenommen werden, bevor beide den Hohlraum 51 begrenzende Außenwände durch den Laser vollständig durchdrungen wurden.

Die Verschlusseinrichtung 46 in Kombination mit der Transfereinrichtung 18 bietet besondere Vorteile der vorliegenden Vorrichtung 10. Durch die Transfereinrichtung 18 kann mittels einer Drehbewegung innerhalb eines Transfervorgangs zeitgleich ein Beladen der Arbeitsstation 12 und ein Entladen von bereits bearbeiteten Werkstücken aus der Arbeitsstation 12 zurück in die Be- und Entladestation 22 durchgeführt werden. Hierzu ist die Verschlusseinrichtung 46 zu öffnen. Da Be- und Entladevorgang zeitgleich vorgenommen werden können, ist hierfür nur eine minimale Öffnungsdauer der Verschlusseinrichtung 46 nötig und eine besonders hohe Taktzeit und Arbeitssicherheit der vorliegenden Vorrichtung 10 sind gewährleistet. Um die Taktzeit noch weiter zu erhöhen ist es vorgesehen, dass die vorliegend als Drehtisch ausgebildete Transfereinrichtung 18 vorliegend je Transfervorgang zwei Werkstücke 14 von der Be- und Entladestation 22 in die Arbeitsstation 12 und umgekehrt zeitgleich im selben Transfervorgang zwei Werkstücke 14 von der Arbeitsstation 12 in die Be- und Entladestation 22 überführen kann.

Die Positioniereinrichtung 28 ist dabei derart ausgebildet, dass die beiden Laserbearbeitungsmodule 32 zwar zur Bearbeitung verschiedener Werkstücke 14 verwendet werden können, gleichzeitig erlaubt die Positioniereinrichtung 28 jedoch auch das Verfahren der Laserbearbeitungsmodule 32 derart, dass beide Laserbearbeitungsmodule 32 das gleiche Werkstück 14 bearbeiten können, beispielsweise in benachbarten Öffnungen. Dies wird auch dadurch unterstützt, dass die Laserbearbeitungsmodule 32 besonders schlank und platzsparend ausgebildet sind. Hierzu weisen die Laserbearbeitungsmodule 32 einen besonderen Aufbau auf, der eine kompakte Bauweise bei gleichzeitig hoher Präzision und Zuverlässigkeit erlaubt. Die Laserbearbeitungsmodule 32 sind jeweils wie in den Figuren 5 bis 7 illustriert aufgebaut.

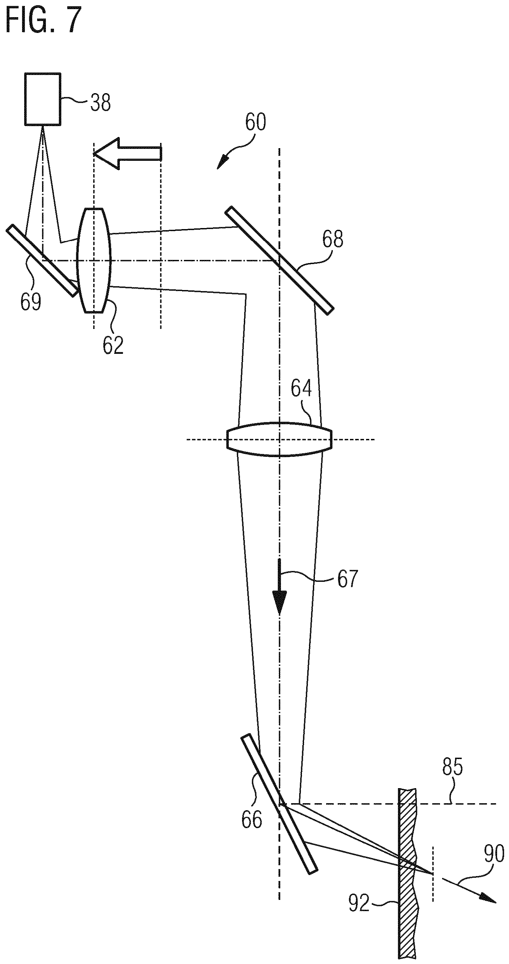

Figur 7 zeigt dabei den prinzipiellen Aufbau einer Strahlführungsoptik 60 der Laserbearbeitungsmodule 32. Die Strahlführungsoptik 60 weist eine Kollimatoreinheit 62 auf. Die Kollimatoreinheit 62 ist über eine entsprechende Bedieneinrichtung 63 einstellbar bzw. der Durchmesser des kollimierten Strahls ist über die Bedieneinrichtung 63 einstellbar. Die Kollimatoreinheit 62 kann auch derart ausgebildet sein, dass sie elektromechanisch einstellbar ist. Die Strahlführungsoptik 60 weißt weiter eine Fokussiereinheit 64 auf, die als fokussierende Linse ausgebildet ist, auf. Neben der Kollimatoreinheit 62 und der Fokussiereinheit 64 weist die Strahlführungsoptik 60 auch eine ausleitungsrichtungsfestlegende Strahlumlenkeinrichtung 66 auf. Die Strahlumlenkeinrichtung 66 legt eine Ausleitungsrichtung 90, also die Richtung, in der der Laserstrahl das Laserbearbeitungsmodul 32 ohne weitere Umlenkung verlässt, bzw. auf die zu bearbeitende Oberfläche geleitet wird, fest. Der Laserstrahl 86 trifft entlang einer optischen Hauptrichtung 67, die entlang einer Modulachse 84 erstreckt ist, auf die ausleitungsrichtungsfestlegende Strahlumlenkeinrichtung 66. Die Strahlführungsoptik 60 umfasst auch eine erste weitere Strahlumlenkeinrichtung 68 und eine zweite weitere Strahlumlenkeinrichtung 69.

Die erste weitere Strahlumlenkeinrichtung 68 lenkt den Laserstrahl 86 in die optische Hauptrichtung 67 um. Entlang der optischen Hauptrichtung 67 passiert der Laserstrahl 86 die Fokussiereinheit 64.

Die zweite weitere Strahlumlenkeinrichtung 69 lenkt den Laserstrahl 86 in eine (vorliegend orthogonal) zur optischen Hauptrichtung 67 geneigt liegende Richtung 71 um. In der zur optischen Hauptrichtung 67 geneigt liegenden Richtung 71 trifft der Strahl auf die erste weitere Strahlumlenkeinrichtung 68.

Figur 5 zeigt das Laserbearbeitungsmodul 32 in einer Seitenansicht, wobei die Strahlführungsoptik 60 in einem Gehäuse 78 angeordnet ist.

Die vorliegenden Laserbearbeitungsmodule 32 sind derart ausgebildet, dass sowohl der die Rotationseinrichtung 70 bildende Direktantriebs 72 als auch die Strahlformenden und umlenkenden optischen Komponenten (Strahlführungsoptik 60) im Laserbearbeitungsmodul 32 angeordnet sind. Dies macht die Laserbearbeitungsmodule 32 einfach austauschbar, kompakt und beschädigungsresistent. Sämtliche o.g. Komponenten können eingeschalt im Laserbearbeitungsmodul 32 untergebracht sein und das Laserbearbeitungsmodul 32 verfügt lediglich über ein Minimum an Verbindungsstellen (bspw. eine Anschlussstelle 102 für den Lichtleiter 40 zur Einkopplung des Laserstrahls 86). Die Vorrichtung ist damit in einfacher Weise um weitere Laserbearbeitungsmodule 32 ergänzbar, was in Kombination mit der Transfereinrichtung eine hohe Flexibilität bzgl. der Taktrate der Vorrichtung ermöglicht. So können mehrere Laserbearbeitungsmodule 32 vorgesehen werden, die jeweils mehrere Werkstücke bearbeiten können um die Vorrichtung mit besonders hohem Durchsatz zu fahren. Die Transfervorrichtung kann pro Transfervorgang dabei mehrere Werkstücke in die Arbeitsstation befördern. Andererseits kann die Vorrichtung bei einem Bedarf für nur geringe Taktung quasi abgerüstet werden, in dem bspw. nur ein Werkstück pro Transfervorgang in die Arbeitsstation bewegt wird und nur ein Laserbearbeitungsmodul 32 vorgesehen ist, dass sequentiell die einzelnen Werkstücköffnungen bearbeitet werden.

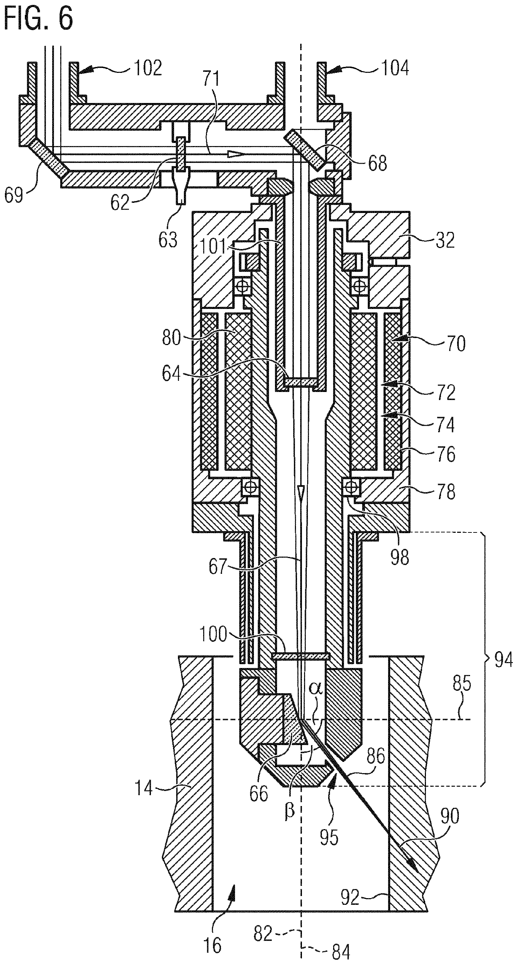

In der Schnittdarstellung von Figur 6 ist besonders anschaulich illustriert, dass das Laserbearbeitungsmodul 32 eine Rotationseinrichtung 70 umfasst. Die Rotationseinrichtung 70 ist dabei vorliegend in Form eines Direktantriebs 72, der als Hohlwellenantrieb 74 ausgebildet ist, realisiert.

Ein Stator 76 des Hohlwellenantriebs 74 ist drehfest mit dem Gehäuse 78 des Laserbearbeitungsmoduls 32 verbunden. Ein Rotor 80 des Hohlwellenantriebs 74 ist um eine Rotationsachse 82, welche mit der Modulachse 84 zusammenfällt, rotierbar in dem Laserbearbeitungsmodul 32 angeordnet. Eine orthogonal zur Modulachse 84 angeordnete Ebene 85 ist in den Figuren 5 und 6 dargestellt.

Bei Betätigung des Hohlwellenantriebs 74 wird der Rotor 80 und die mit ihm verbundenen Komponenten in Rotation um die Modulachse 84 versetzt. Hierdurch wird die Strahlumlenkeinrichtung 66 in Rotation versetzt, so dass der zur Bearbeitung vorgesehene kollimierte und fokussierte Laserstrahl 86 um die Modulachse 84 rotierend in der Ausleitungsrichtung (welche vorliegend durch den Pfeil mit dem Bezugszeichen 90 illustriert ist) aus dem Laserbearbeitungsmodul 32 austritt und entsprechend auf eine zu bearbeitende Oberfläche 92 der Werkstücköffnung 16 des Werkstücks 14 trifft.

Die Ausleitungsrichtung 90 ist gegenüber der Modulachse 84 und der orthogonal zur Modulachse 84 angeordneten Ebene 85 geneigt, sie verläuft also zu beiden in einem von Null Grad verschiedenen Winkel (Winkel α gegenüber der Ebene 85 und Winkel β gegenüber der Modulachse 84). Vorzugsweise beträgt sowohl der Winkel α als auch der Winkel β,wenigstens 10°, wenigstens 20°, wenigstens 30°.

Das Laserbearbeitungsmodul 32 weist einen Spindelabschnitt 94 auf, der zum Einführen in die zu bearbeitende Werkstücköffnung 16 ausgebildet ist. Der Spindelabschnitt 94 umfasst eine Auslassöffnung 95 für den Laserstrahl 86. Aus der Auslassöffnung 95 verlässt der Laserstrahl 86 das Laserbearbeitungsmodul 32 in Ausleitungsrichtung 90.

Der Direktantrieb 72 beziehungsweise der Hohlwellenantrieb 74 ist entlang der Modulachse 84 gesehen beabstandet zum Spindelabschnitt 94 angeordnet, der wiederum zum Einführen in die zu bearbeitende Werkstücköffnung 16 ausgebildet ist.

Durch die Ausbildung des Antriebs des Laserbearbeitungsmoduls 32 als Direktantrieb 72 beziehungsweise vorliegend als Hohlwellenantrieb 74 kann das Laserbearbeitungsmodul 32 sehr kompakt gebaut werden. Durch den Spindelabschnitt 94 der über Lageranordnungen 98 drehbar gegenüber dem übrigen Gehäuse 78 des Laserbearbeitungsmoduls 32 angeordnet ist, kann die Auslassöffnung 95 des Laserstrahls 86 vorteilhaft in die zu bearbeitenden Werkstücköffnungen 16 eingeführt werden, so dass eine effiziente Bearbeitung der Oberflächen der Werkstücköffnungen 16 möglich ist. Durch das Vorsehen eines Direktantriebs 72 ist eine besonders genaue Bearbeitung möglich, die mit einer kompakten Bauweise des Laserbearbeitungsmoduls 32 kombiniert ist. Außerdem ist die Vorrichtung 10 in einfacher Art und Weise mit weiteren Laserbearbeitungsmodulen 32 bestückbar, so dass die Taktzeit der Vorrichtung 10 sehr variabel ist bzw. auf einfache Art und Weise erhöht werden kann.

Der Direktantrieb 72 ist entlang der Modulachse 84 versetzt zu dem Spindelabschnitt 94 ausgebildet. Durch die versetzte Anordnung kann der Spindelabschnitt 94 derart ausgebildet sein, dass er keine Teile des Direktantriebs 72 umfasst und kann entsprechend schlank ausgebildet sein.

Im Betrieb des Laserbearbeitungsmoduls kann der Spindelabschnitt 94 in die Werkstücköffnung eingeführt werden und anschließend durch Rotation der Strahlumlenkeinrichtung 66 der aus dem Laserbearbeitungsmodul 32 austretende Laserstrahl 86 in Auslassrichtung 90 um die Modulachse 84 herum rotiert werden. Dieser Rotation des Laserstrahls 86 kann ein Absenken des Laserbearbeitungsmoduls 32 in die Werkstücköffnung überlagert sein. Das Laserbearbeitungsmodul kann generell entlang der Modulachse 84 relativ zum Werkstück bewegt werden (Bewegung des Laserbearbeitungsmoduls 32 und/oder Werkstücks 14). Diese Bewegung kann schrittweise erfolgen, so dass die Laserbearbeitung jeweils quasi ringförmig vorgenommen wird oder kontinuierlich, so dass eine Art spiralförmiger Pfad entlang der Oberfläche der Öffnung durch den Laser bearbeitet wird.

Da die Strahlumlenkeinrichtung 66 gegenüber den übrigen optischen Komponenten des Systems rotiert wird, können diese starr und damit platzsparend und robust ausgebildet werden. Lediglich die Strahlumlenkeinrichtung 66 wird rotiert. Die Fokussiereinheit 64 ist vorliegend drehfest mit dem Gehäuse 78 verbunden. Die Fokussiereinheit 64 ist innerhalb des Rotors 80 angeordnet. Die Fokussiereinheit 64 ist über ein sich in den Rotor 80 erstreckendes hülsenartiges Element 101, das mit dem Gehäuse 78 verbunden ist, gehalten. Das hülsenartiges Element 101 ist konzentrisch zur Modulachse 84 angeordnet.

Der Laserstrahl wird über eine Anschlussstelle 102 für den Lichtleiter 40 in das Laserbearbeitungsmodul 32 eingekoppelt. Die Anschlussstelle 102 kann dabei derart ausgebildet und angeordnet sein, dass der Laserstrahl zunächst versetzt (wie figürlich dargestellt) oder geneigt zur optische Hauptrichtung 87 in das Laserbearbeitungsmodul 32 eingekoppelt wird. Mittels der zweiten weiteren Strahlumlenkeinrichtung 69 wird der Strahl 86 vorliegend auf die Kollimatoreinheit 62 geführt und von dieser auf eine zweite weitere Strahlumlenkeinrichtung 68, die vorliegend als Interferenzspiegel ausgebildet ist, geführt. Die zweite weitere Strahlumlenkeinrichtung 68 lenkt den Strahl 86 auf die Fokussiereinheit 64, und von dieser durch die strahlendurchlässige Dichteinheit 100 über die Strahlumlenkeinrichtung 66 durch die Auslassöffnung 95 auf die zu bearbeitende Oberfläche 92. Die strahlendurchlässige Dichteinheit 100 ist optional.

Die erste weitere Strahlumlenkeinrichtung 68 ist als Interferenzspiegel ausgebildet, um ein von der bearbeiteten Oberfläche 92 kommendes optisches Signal in Richtung einer Sensoranschlussstelle 104 zu leiten. Die erste weitere Strahlumlenkeinrichtung 68 leitet dabei das von der bearbeiteten Oberfläche 92 kommende optische Signal entlang der optischen Hauptrichtung zur Sensoranschlussstelle 104.

Die strahlendurchlässige Dichteinheit 100 ist entlang der Strahlrichtung vor der Strahlumlenkeinrichtung 64 angeordnet und dazu, zu verhindern, dass Partikel, die bei der Laserbearbeitung entstehen, oder andere Verschmutzungen in den Strahlengang des Laserbearbeitungsmoduls 32 eindringen können.

Die verschiedenen Aspekte der beiden in der vorliegenden Vorrichtung 10 realisierten Erfindungen können auch jeweils einzeln vorgesehen werden, besonders vorteilhaft ist jedoch, wenn die Aspekte beider Erfindungen in einer erfindungsgemäßen Vorrichtung realisiert sind.

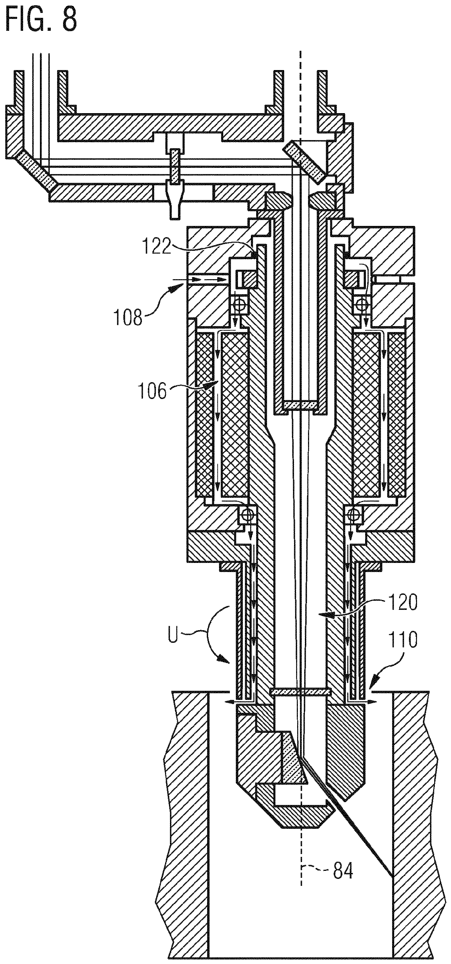

In Figur 8 ist eine Schnittdarstellung (entsprechend der von Figur 6) gezeigt, wobei der Übersichtlichkeit halber die meisten Bezugszeichen nicht dargestellt sind. In Figur 8 ist eine erste Sperrgaseinrichtung 106 bzw. deren Strömungsweg illustriert. Das Sperrgas (über Pfeile illustiert) dient dazu zu verhindert, dass Verunreinigungen in den optischen Pfad gelangen. Das Sperrgas wird über einen ersten Sperrgaseinlass 108 in das Laserbearbeitungsmodul 32 eingeleitet. Ein Sperrgasauslass 110 ist am Spindelabschnitt 94 angeordnet. Der Sperrgasauslass 110 ist in einer Umfangsrichtung U (Umfang des Spindelabschnitts) kreisförmig umlaufend ausgebildet sein. Der erste Sperrgasströmungsweg bzw. die Sperrgaseinrichtung 106 kann insbesondere auch derart ausgebildet sein, dass das Sperrgas durch den Spalt zwischen Rotor 80 und Stator 76 des Hohlwellenantriebs der Rotationseinrichtung strömt.

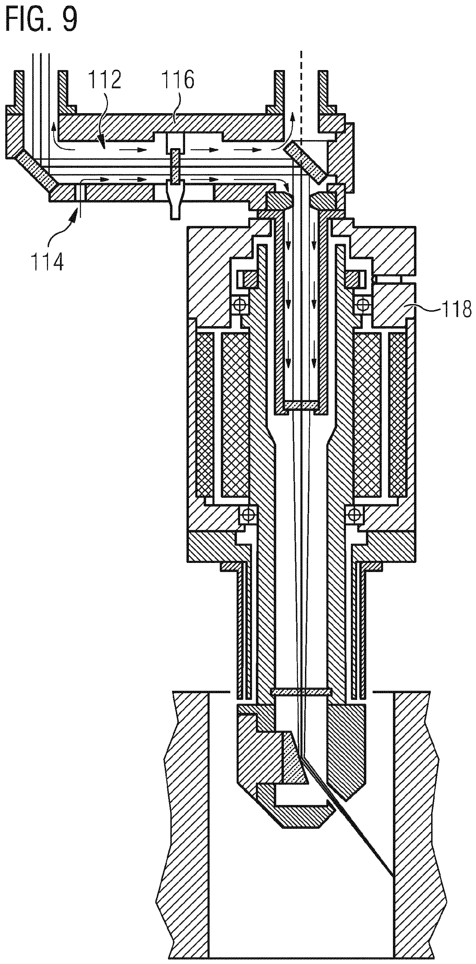

Das Laserbearbeitungsmodul 32 kann alternativ oder zusätzlich auch mit einer zweiten Sperrgaseinrichtung 112 bzw. einem zweiten Sperrgasströmungsweg ausgebildet sein. Der Übersichtlichkeit halber ist dieser in Figur 9 illustriert. Die zweite Sperrgaseinrichtung 112 wird über einen zweiten Sperrgasanschluss 114 mit Sperrgas gespeist. Der Sperrgasanschluss 114 ist in einem Abschnitt 116 des Gehäuses 78 angeordnet, in dem die Kollimatoreinheit 62 angeordnet ist. Dieser Abschnitt 116 des Gehäuses 78 ist gesondert zu dem Abschnitt 118 des Gehäuses 78 ausgebildet sein, der die Rotationseinrichtung 70 (Direktantrieb) umfasst.

Das Sperrgas der zweiten Sperrgaseinrichtung 112 umströmt den Kollimator 62. Das Sperrgas der zweiten Sperrgaseinrichtung 112 füllt das hülsenartige Element 101 in dem die Fokussiereinheit 64 gehalten ist.

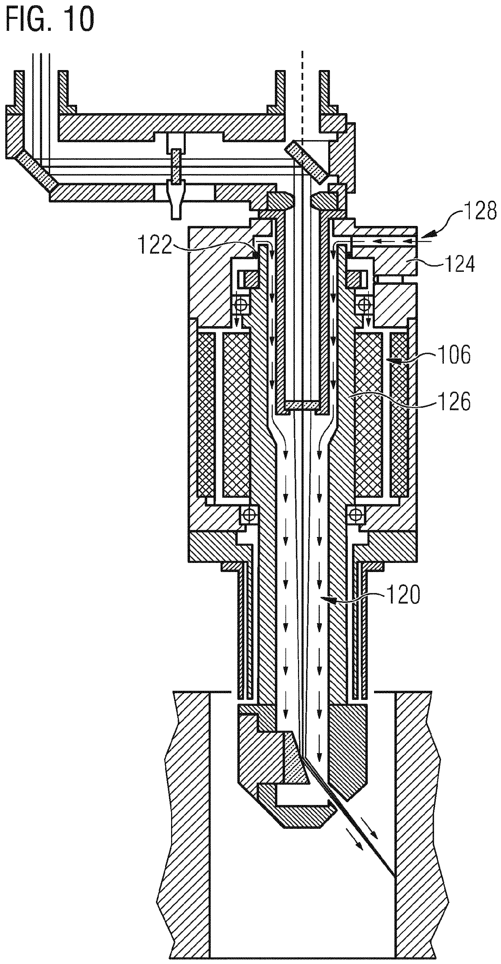

In Figur 10 ist in einer Darstellung entsprechend von Figur 6, 8 und 9 der Einsatz eines Prozessgases illustriert. Ein Prozessgasströmungsweg 120 ist derart ausgebildet, dass das Prozessgas (illustriert durch Pfeile) entlang der Außenseite des hülsenartigen Elements 101, das der Halterung der Fokussiereinheit 64 dient, strömt.

Das Laserbearbeitungsmodul 32 der Figur 10 unterscheidet sich von dem in den Figuren 6, 8 und 9 gezeigten dadurch, dass keine Dichteinheit 100 vorgesehen ist. Das Prozessgas durchströmt kontinuierlich das Innere des Spindelabschnitts 94.

Das Laserbearbeitungsmodul 32 kann derart ausgebildet sein, dass der Prozessgasströmungsweg 120 über eine Dichtung 122 von dem ersten Sperrgasströmungsweg 106 getrennt ist. Die Dichtung 122 kann insbesondere zwischen einem feststehenden Teil 124 des Gehäuses 78 und einem durch die Rotationseinrichtung 70 rotierbaren Teil 126 des Laserbearbeitungsmoduls 32 angeordnet sein.

Das Prozessgas wird über einen Prozessgaseinlass in das Laserbearbeitungsmodul 32 eingeleitet. Es umströmt die Außenseite des hülsenartigen Elements 101. Es strömt im Inneren des Spindelabschnitts 94. Das Prozessgas verlässt das Laserbearbeitungsmodul 32 über die Auslassöffnung 95. Die Auslassöffnung 95 ist derart konfiguriert, dass sie eine Art Düse bildet, die die austretende Strömung des Prozessgases auf die durch den Laserstrahl bearbeitete Stelle der Werkstückoberfläche leitet. Das Prozessgas kann damit als eine Art Schutzgas bei der Bearbeitung der Oberfläche dienen.

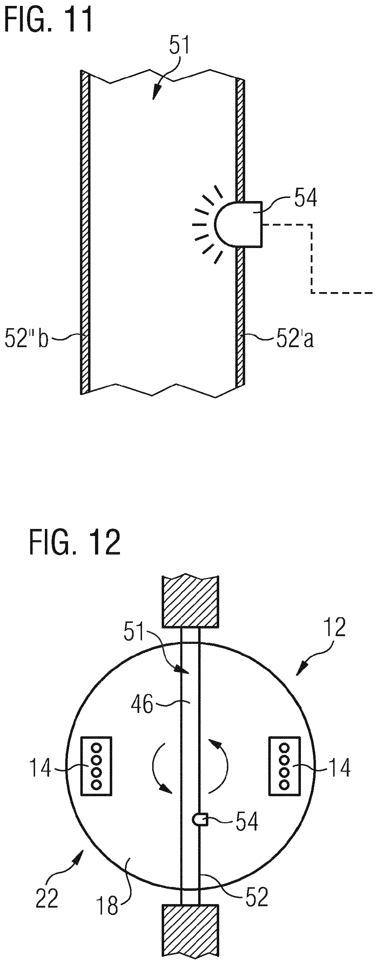

In Figur 11 ist die Trennwand 46 mit dem Hohlraum 51 illustriert. Die Trennwand 46 weist die Außenwand 52 auf, welche wiederum eine erste Seitenfläche 52a und eine zweite Seitenfläche 52b umfasst, die gemeinsam den Hohlraum 51 begrenzen.

In Figur 12 ist eine erfindungsgemäße Verschlusseinrichtung 46 schematisch illustriert, bei der die Trennwand mit der Transfereinrichtung 18 verbunden ist und über deren Drehbewegung geöffnet und geschlossen wird.

## Patentansprüche

1. Vorrichtung (10) zum Laseraufrauen von Oberflächen (92) mehrerer zueinander beanstandeter Werkstücköffnungen (16), insbesondere Oberflächen (92) von Zylinderbohrungen oder einer einzelnen Zylinderbohrung, umfassend mindestens eine Belade- und Entladestation (22), in der ein zu bearbeitendes Werkstück (14) in die Vorrichtung (10) ladbar ist und ein bereits bearbeitetes Werkstück (14) aus der Vorrichtung (10) entnehmbar ist, mindestens eine Arbeitsstation (12), wobei die Arbeitsstation (12) mindestens ein Laserbearbeitungsmodul (32) zur Bearbeitung von Werkstücken (14) in der Arbeitsstation (12) umfasst, wobei die Vorrichtung (10) weiterhin eine Transfereinrichtung (18) umfasst, die ausgebildet ist, um einen Werkstücktransfer zwischen Belade- und Entladestation (22) und Arbeitsstation (12) durchzuführen, wobei die Transfereinrichtung (18) ausgebildet ist, um mittels einer Drehbewegung einen Transfervorgang eines zu bearbeitenden Werkstücks (14) von der Belade- und Entladestation (22) in die Arbeitsstation (12) und zeitgleich durch die selbe Drehbewegung einen Transfervorgang eines bearbeiteten Werkstücks (14) von der Arbeitsstation (12) in die Belade- und Entladestation (22) durchzuführen, wobei die Arbeitsstation (12) zum einen mindestens ein Laserbearbeitungsmodul (32) mit einer Modulachse (84) und zum anderen eine Positioniereinrichtung (28), über die eine Relativbewegung zwischen einem in der Arbeitsstation (12) zur Bearbeitung angeordneten Werkstück (14) und dem Laserbearbeitungsmodul (32) bewirkbar ist, umfasst, wobei das Laserbearbeitungsmodul (32) eine Strahlführungsoptik (60) umfasst, die ausgebildet ist, um einen Laserstrahl (86) zur Bearbeitung der Oberfläche (92) in einer Ausleitungsrichtung (90), die gegenüber der Modulachse (84) und einer zur Modulachse (84) orthogonalen Ebene (85) geneigt ist, auf die zu bearbeitende Oberfläche (92) zu leiten, und wobei das Laserbearbeitungsmodul (32) ausgebildet und angeordnet ist, um den Laserstrahl (86) um die Modulachse (84) zu rotieren, wobei die Strahlführungsoptik (60) eine Kollimatoreinheit (62) zur Kollimation des von einer Strahlquelle (38) kommenden Laserstrahls (86) und eine Fokussiereinheit (64) zur Fokussierung des kollimierten Laserstrahls (86) sowie eine ausleitungsrichtungsfestlegende Strahlumlenkeinrichtung (66), die den Laserstrahl (86) zur Bearbeitung der Oberfläche (92) von einer entlang der Modulachse (84) erstreckten optischen Hauptrichtung (67) in die Ausleitungsrichtung (90) umlenkt, umfasst, wobei die Rotationseinrichtung (70) ausgebildet ist, um die ausleitungsrichtungsfestlegende Strahlumlenkeinrichtung (66) gegenüber der Kollimatoreinheit (62) oder gegenüber der Kollimatoreinheit (62) und der Fokussiereinheit (64) um die Modulachse (84) zu rotieren, um die Rotation des austretenden Laserstrahls (86), um die Modulachse (84) zu bewirken, wobei das Laserbearbeitungsmodul (32) im optischen Pfad vor der ausleitungsrichtungsfestlegenden Strahlumlenkeinrichtung (66), und insbesondere vor der Fokussiereinheit (64), eine weitere Strahlumlenkeinrichtung (68) umfasst, die den Laserstrahl in die optische Hauptrichtung (67) umlenkt, **dadurch gekennzeichnet, dass** die Vorrichtung (10) weiter eine Verschlusseinrichtung (46) umfasst, die angeordnet und ausgebildet ist, um in einem Abschirmzustand die Belade- und Entladestation (22) Laserstrahlungssicher von einem Arbeitsraum (34) der Arbeitsstation (12) zu trennen, und, dass das Laserbearbeitungsmodul (32) eine Rotationseinrichtung (70) umfasst, die einen Direktantrieb (72), der als Hohlwellenantrieb (74) ausgebildet ist, umfasst, und ein Rotor des Hohlwellenantriebs (74) um eine Rotationsachse (82) des Hohlwellenantriebs (74), die der Modulachse (84) entspricht, herum rotierbar ist, und, dass die Fokussiereinheit (64) über ein sich in den Rotor erstreckendes hülsenartiges Element (101), das mit dem Gehäuse (78) verbunden ist, gehalten ist, und, dass das Laserbearbeitungsmodul (32) einen Prozessgasströmungsweg (120) umfasst, wobei dieser einen sich entlang der optischen Hauptrichtung (67) erstreckenden Abschnitt umfasst, wobei der Abschnitt zwischen der ersten weiteren Strahlumlenkeinrichtung (68) und der ausleitungsrichtungsfestlegenden Strahlumlenkeinrichtung (66) angeordnet ist und das Prozessgas an der Auslassöffnung (95) austritt, wobei der Prozessgasströmungsweg (120) derart ausgebildet ist, dass das Prozessgas entlang der Außenseite des hülsenartigen Elements (101), das der Halterung der Fokussiereinheit (64) dient, strömt.

2. Vorrichtung nach Anspruch 1, **dadurch gekennzeichnet, dass** ein Stator (76) des Hohlwellenantriebs (74) drehfest mit einem Gehäuse (78) des Laserbearbeitungsmoduls (32) verbunden ist.

3. Vorrichtung nach einem der vorigen Ansprüche, **dadurch gekennzeichnet, dass** das Laserbearbeitungsmodul (32) eine zweite weitere Strahlumlenkeinrichtung (69) umfasst, die ausgebildet und angeordnet ist, um den Laserstrahl (86), vorzugsweise durch Umlenkung in eine zur optischen Hauptrichtung (67) geneigten, insbesondere orthogonalen, Richtung, zur ersten weiteren Strahlumlenkeinrichtung (68) hin zu leiten.

4. Vorrichtung nach einem der vorigen Ansprüche, **dadurch gekennzeichnet, dass** eine der weiteren Strahlumlenkeinrichtungen (68, 69), insbesondere die erste weitere Strahlumlenkeinrichtung (68), ein entlang des optischen Pfads von der Werkstückoberfläche (92), vorzugsweise entlang der optischen Hauptrichtung (67), kommendes optisches Signal aus dem optischen Pfad des Laserstrahls (86) auskoppelt und einer Sensoranschlussstelle (104) zuführt.

5. Vorrichtung nach einem der vorigen Ansprüche, **dadurch gekennzeichnet, dass** das Laserbearbeitungsmodul (32) einen verjüngt ausgebildeten Spindelabschnitt (94) umfasst, der zum Einführen in die zu bearbeitende Werkstücköffnung (16) ausgebildet ist, insbesondere wobei der Direktantrieb (72) entlang der Modulachse (84) gesehen beabstandet zu dem zum Einführen in die zu bearbeitende Werkstücköffnung (16) ausgebildeten Spindelabschnitt (94) angeordnet ist.

6. Vorrichtung nach einem der vorigen Ansprüche, **dadurch gekennzeichnet, dass** Mittels der Positioniereinrichtung (28) eine Relativbewegung zwischen dem in der Arbeitsstation (12) zur Bearbeitung angeordneten Werkstück (14) und dem Laserbearbeitungsmodul (32) bewirkbar ist, die in einer zur Modulachse (84) orthogonalen Ebene (85) verläuft und/oder in Richtung der Modulachse (84) verläuft.

7. Vorrichtung nach einem der vorigen Ansprüche, **dadurch gekennzeichnet, dass** die Positioniereinrichtung (28) eine Schlittenanordnung (30), insbesondere eine Kreuzschlittenanordnung umfasst, wobei das Laserbearbeitungsmodul (32) an der Schlittenanordnung (30) angeordnet ist.

8. Vorrichtung nach einem der vorigen Ansprüche, **dadurch gekennzeichnet, dass** das Laserbearbeitungsmodul (32) wenigstens eine erste Sperrgaseinrichtung (106) umfasst, die einen Sperrgasauslass (110) im Bereich der Auslassöffnung (95) des Laserstrahls aufweist, wobei der Sperrgasauslass (110) insbesondere am Spindelabschnitt (94) angeordnet ist, insbesondere an der die Auslassöffnung (95) umfassenden Hälfte des Spindelabschnitts (94) angeordnet ist.

9. Vorrichtung nach einem der vorigen Ansprüche, **dadurch gekennzeichnet, dass** das Laserbearbeitungsmodul (32) wenigstens eine zweite Sperrgaseinrichtung (112) umfasst, die derart ausgebildet und angeordnet ist, dass sie Sperrgas in das Innere eines hülsenartigen Elements (101), in dem die Fokussiereinheit (64) gehalten ist, leitet.

10. Vorrichtung nach einem der vorigen Ansprüche, **dadurch gekennzeichnet, dass** die Transfereinrichtung (18) als Drehtisch, insbesondere als Hubdrehtisch, ausgebildet ist.

11. Vorrichtung nach dem vorigen Anspruch, **dadurch gekennzeichnet, dass** der Drehtisch ausgebildet ist, um je Transfervorgang zeitgleich je mindestens 2 Werkstücke (14) von der Belade- und Entladestation (22) in die Arbeitsstation und zeitgleich durch denselben Transfervorgang je mindestens 2 Werkstücke von der Arbeitsstation (12) in die Belade- und Entladestation (22) zu überführen.

12. Vorrichtung nach einem der vorigen Ansprüche, **dadurch gekennzeichnet, dass** die Verschlusseinrichtung (46) eine öffen- und schließbare Trennwand (48) umfasst, die einen doppelwandigen Aufbau aufweist, wobei ein Hohlraum (51) durch eine Außenwand (52) begrenzt ist und die Trennwand (48) eine Sensoreinheit (54) umfasst, die ausgebildet und angeordnet ist, um zu detektieren, wenn Laserstrahlung des Lasers des Laserbearbeitungsmoduls (32) in den Hohlraum (51) eindringt.

13. Vorrichtung nach einem der vorigen Ansprüche, **dadurch gekennzeichnet, dass** der Arbeitsraum (34) eine Absaugeinrichtung (44) umfasst, insbesondere die in einer Bearbeitungsposition eines zu bearbeitenden Werkstücks (14) im Arbeitsraum (34) der Arbeitsstation (12), unterhalb einer zu bearbeitenden Werkstücköffnung (16) angeordnet ist.

14. Vorrichtung nach einem der vorigen Ansprüche, **dadurch gekennzeichnet, dass** die Vorrichtung ein von dem Arbeitsraum (34) der Arbeitsstation (12) getrenntes Strahlungsquellenabteil (36) umfasst, in dem eine Strahlungsquelle (38) zur Bereitstellung des für die Bearbeitung vorgesehenen Laserstrahls (86), angeordnet ist, wobei ein Lichtleiter (40) vorgesehen ist, um den Laserstrahl (86) von der Strahlungsquelle (38) in den Arbeitsraum (34) der Arbeitsstation (12) zu leiten.

15. Verfahren zum Laseraufrauen von Werkstücköffnungen (16), insbesondere Oberflächen (92) von Zylinderbohrungen, unter Verwendung einer Vorrichtung (10) zur Laserbearbeitung nach einem der vorangehenden Ansprüche umfassend die Schritte:
Positionieren eines zu bearbeitenden Werkstücks (14) in einer Arbeitsstation (12) der Vorrichtung (10);
Positionieren eines Spindelabschnitts (94) eines Laserbearbeitungsmoduls (32) der Vorrichtung (10) in der zu bearbeitenden Werkstücköffnung (16) des Werkstücks (14), das sich in der Arbeitsstation (12) befindet;
Bestrahlen der Oberfläche (92) der zu bearbeitenden Werkstücköffnung (16) mittels eines über das Laserbearbeitungsmodul (32) in die Werkstücköffnung (16) geleiteten insbesondere kontinuierlichen, Laserstrahls (86), wobei der Laserstrahl (86) um die Modulachse (84) rotiert,
wobei das Laserbearbeitungsmodul (32) eine Strahlführungsoptik (60) umfasst, die ausgebildet ist, um einen Laserstrahl (86) zur Bearbeitung der Oberfläche (92) in einer Ausleitungsrichtung (90), die gegenüber der Modulachse (84) und einer zur Modulachse (84) orthogonalen Ebene (85) geneigt ist, auf die zu bearbeitende Oberfläche (92) zu leiten,
**dadurch gekennzeichnet, dass**
eine Strahlumlenkeinrichtung (66), die den Laserstrahl (86) zur Bearbeitung der Oberfläche (92) in die Ausleitungsrichtung (90) umlenkt, gegenüber einer Kollimatoreinheit (62) zur Kollimation des von einer Strahlquelle (38) kommenden Laserstrahls (86) oder gegenüber der Kollimatoreinheit (62) und einer Fokussiereinheit (64) zur Fokussierung des kollimierten Laserstrahls (86) um die Modulachse (84) rotiert, um die Rotation des austretenden Laserstrahls (86), um die Modulachse (84) zu bewirken, wobei das Positionieren des zu bearbeitenden Werkstücks (14) in der Arbeitsstation (12) der Vorrichtung (10) in einem Transfervorgang einer Transfereinrichtung (18) erfolgt, wobei in dem Transfervorgang zeitgleich mittels einer Drehbewegung der Transfereinrichtung (18) ein bereits bearbeitetes Werkstück (14) aus der Arbeitsstation (12) entnommen wird, wobei eine Verschlusseinrichtung (46), die den Arbeitsraum (12) räumlich von einer Belade- und Entladestation (22) trennt, zur Durchführung des Transfervorgangs geöffnet wird, wobei die Werkstücke (14), welche die Arbeitsstation (12) im Transfervorgang verlassen, und die Werkstücke (14), welche im Transfervorgang in die Arbeitsstation (12) bewegt werden, zeitgleich die Verschlusseinrichtung (46) räumlich passieren und die Verschlusseinrichtung (46) anschließend geschlossen wird, um den Arbeitsraum (12) räumlich von der Belade- und Entladestation (22) zu trennen.

16. Verfahren nach dem vorigen Anspruch, **dadurch gekennzeichnet, dass** der Rotationsbewegung der Strahlumlenkeinrichtung (66) eine translatorische Relativbewegung zwischen Werkstück (14) und Strahlumlenkeinrichtung (66) des Laserbearbeitungsmoduls (32), insbesondere zwischen Werkstück (14) und dem Laserbearbeitungsmodul (32), überlagert ist, die entlang der Richtung der Modulachse (84) gerichtet ist.

17. Verfahren nach einem der beiden vorigen Ansprüche, **dadurch gekennzeichnet, dass** das Laserbearbeitungsmodul (32) eine Rotationseinrichtung (70) umfasst, die ausgebildet ist, um die Strahlumlenkeinrichtung (66) gegenüber der Kollimatoreinheit (62) oder gegenüber der Kollimatoreinheit (62) und der Fokussiereinheit (64) um die Modulachse (84) zu rotieren, um die Rotation des austretenden Laserstrahls (86), um die Modulachse (84) zu bewirken, wobei die Rotationseinrichtung (70) einen Direktantrieb (72) umfasst, der während des Bearbeitungsvorgangs in Richtung der Modulachse (84) gesehen außerhalb, insbesondere oberhalb, der zu bearbeitenden Werkstücköffnung (16) des Werkstücks (14) angeordnet ist.

18. Verfahren nach einem der 3 vorigen Ansprüche, **dadurch gekennzeichnet, dass** zeitgleich zur Laserbearbeitung eine Überwachung des Bearbeitungsprozesses durchgeführt wird, wobei für diese Überwachung ein von der bearbeiteten Oberfläche (92) kommendes optisches Signal zunächst entlang des optischen Pfads des zur Bearbeitung genutzten Lasers (86) in dem Laserbearbeitungsmodul (32) geführt ist und mittels einer Strahlumlenkeinrichtung (68), die insbesondere als Interferenzspiegel ausgebildet sein kann, aus dem optischen Pfad des Laserstrahls (86) ausgekoppelt wird und einer Sensoranschlussstelle (104) zugeführt wird.

19. Verfahren nach einem der 4 vorigen Ansprüche, **dadurch gekennzeichnet, dass** wenigstens ein Werkstück (14) mit mehreren zu bearbeitenden Öffnungen (16) mittels des Lasers bearbeitet wird, wobei während der Laserbearbeitung die momentan nicht bearbeiteten Öffnungen mittels einer dem verwendeten Laserbearbeitungsmodul (32) zugeordneten Blende (45) abgedeckt werden.

## Claims

1. Device (10) for laser roughening surfaces (92) of a plurality of workpiece openings (16) which are spaced apart from one another, in particular surfaces (92) of cylinder bores or a single cylinder bore, the device comprising at least one loading and unloading station (22) in which a workpiece (14) to be machined can be loaded into the device (10) and an already machined workpiece (14) can be removed from the device (10), at least one work station (12), the work station (12) comprising at least one laser machining module (32) for machining workpieces (14) in the work station (12), the device (10) further comprising a transfer apparatus (18) which is designed to carry out a workpiece transfer between the loading and unloading station (22) and the work station (12), the transfer apparatus (18) being designed to carry out a transfer process of a workpiece (14) to be machined from the loading and unloading station (22) to the work station (12) by means of a rotary movement and at the same time to carry out a transfer process of a machined workpiece (14) from the work station (12) to the loading and unloading station (22) by means of the same rotary movement, the work station (12) comprising at least one laser machining module (32) which has a module axis (84), and a positioning apparatus (28) via which a relative movement can be brought about between a workpiece (14) arranged in the work station (12) for machining and the laser machining module (32), the laser machining module (32) comprising beam guiding optics (60) which are designed to guide a laser beam (86) for machining the surface (92) in an output direction (90), which is inclined with respect to the module axis (84) and a plane (85) orthogonal to the module axis (84), onto the surface (92) to be machined, and the laser machining module (32) being designed and arranged to rotate the laser beam (86) about the module axis (84), the beam guiding optics (60) comprising a collimator unit (62) for collimating the laser beam (86) coming from a beam source (38) and a focusing unit (64) for focusing the collimated laser beam (86) as well as a beam deflecting apparatus (66) which determines the output direction and deflects the laser beam (86) for machining the surface (92) from a main optical direction (67) extending along the module axis (84) into the output direction (90), the rotation apparatus (70) being designed to rotate the beam deflecting apparatus (66) which determines the output direction relative to the collimator unit (62) or relative to the collimator unit (62) and the focusing unit (64) about the module axis (84) in order to cause the emerging laser beam (86) to be rotated about the module axis (84), the laser machining module (32) comprising a further beam deflecting apparatus (68) in the optical path upstream of the beam deflecting apparatus (66) which determines the output direction, and in particular upstream of the focusing unit (64), which further beam deflecting apparatus deflects the laser beam in the main optical direction (67), **characterized in that** the device (10) further comprises a closure apparatus (46) which is arranged and designed, in a shielded state, to separate the loading and unloading station (22) from a work space (34) of the work station (12) in a laser radiation-safe manner, and **in that** the laser machining module (32) comprises a rotation apparatus (70) which comprises a direct drive (72) which is designed as a hollow shaft drive (74), and a rotor of the hollow shaft drive (74) is rotatable about an axis of rotation (82) of the hollow shaft drive (74) which corresponds to the module axis (84), and **in that** the focusing unit (64) is held via a sleeve-like element (101) extending into the rotor and connected to the housing (78), and **in that** the laser machining module (32) comprises a process gas flow path (120), this comprising a portion extending in the main optical direction (67), the portion being arranged between the first further beam deflecting apparatus (68) and the beam deflecting apparatus (66) which determines the output direction and the process gas exiting at the outlet opening (95), the process gas flow path (120) being designed such that the process gas flows along the outer side of the sleeve-like element (101) which is used to hold the focusing unit (64).

2. Device according to claim 1, **characterized in that** a stator (76) of the hollow shaft drive (74) is connected for conjoint rotation with a housing (78) of the laser machining module (32).

3. Device according to either of the preceding claims, **characterized in that** the laser machining module (32) comprises a second further beam deflecting apparatus (69) which is designed and arranged to guide the laser beam (86), preferably by deflection in an inclined, in particular orthogonal, direction relative to the main optical direction (67), to the first further beam deflecting apparatus (68).

4. Device according to any of the preceding claims, **characterized in that** one of the further beam deflecting apparatuses (68, 69), in particular the first further beam deflecting apparatus (68), decouples an optical signal coming along the optical path from the workpiece surface (92), preferably in the main optical direction (67), from the optical path of the laser beam (86) and supplies it to a sensor connection point (104).

5. Device according to any of the preceding claims, **characterized in that** the laser machining module (32) comprises a tapered spindle portion (94) which is designed for insertion into the workpiece opening (16) to be machined, in particular the direct drive (72) being arranged, when viewed along the module axis (84), at a distance from the spindle portion (94) which is designed for insertion into the workpiece opening (16) to be machined.

6. Device according to any of the preceding claims, **characterized in that** by means of the positioning apparatus (28), a relative movement can be brought about between the workpiece (14) arranged in the work station (12) for machining and the laser machining module (32) which extends in a plane (85) orthogonal to the module axis (84) and/or extends in the direction of the module axis (84).

7. Device according to any of the preceding claims, **characterized in that** the positioning apparatus (28) comprises a carriage arrangement (30), in particular a cross-slide arrangement, the laser machining module (32) being arranged on the carriage arrangement (30).

8. Device according to any of the preceding claims, **characterized in that** the laser machining module (32) comprises at least one first sealing gas apparatus (106) which has a sealing gas outlet (110) in the region of the outlet opening (95) of the laser beam, the sealing gas outlet (110) being arranged in particular on the spindle portion (94), in particular on the half of the spindle portion (94) comprising the outlet opening (95).

9. Device according to any of the preceding claims, **characterized in that** the laser machining module (32) comprises at least one second sealing gas apparatus (112) which is designed and arranged such that it guides sealing gas into the interior of a sleeve-like element (101) in which the focusing unit (64) is held.

10. Device according to any of the preceding claims, **characterized in that** the transfer apparatus (18) is designed as a turntable, in particular as a lifting turntable.

11. Device according to any of the preceding claims, **characterized in that** the turntable is designed to transfer at least 2 workpieces (14) per transfer process from the loading and unloading station (22) to the work station at the same time and, at the same time, to transfer, by means of the same transfer process, at least 2 workpieces from the work station (12) to the loading and unloading station (22).

12. Device according to any of the preceding claims, **characterized in that** the closure apparatus (46) comprises an openable and closable separating wall (48) which has a double-walled construction, a cavity (51) being delimited by an outer wall (52) and the separating wall (48) comprising a sensor unit (54) which is designed and arranged to detect when laser radiation from the laser of the laser machining module (32) penetrates into the cavity (51).

13. Device according to any of the preceding claims, **characterized in that** the work space (34) comprises a suction apparatus (44), in particular which is arranged in a machining position of a workpiece (14) to be machined in the work space (34) of the work station (12), below a workpiece opening (16) to be machined.

14. Device according to any of the preceding claims, **characterized in that** the device comprises a radiation source compartment (36) which is separate from the work space (34) of the work station (12) and in which a radiation source (38) is arranged for providing the laser beam (86) intended for machining, a light guide (40) being provided for guiding the laser beam (86) from the radiation source (38) into the work space (34) of the work station (12).

15. Method for laser roughening workpiece openings (16), in particular surfaces (92) of cylinder bores, using a device (10) for laser machining according to any of the preceding claims, the method comprising the steps of:
positioning a workpiece (14) to be machined in a work station (12) of the device (10);
positioning a spindle portion (94) of a laser machining module (32) of the device (10) in the workpiece opening (16) to be machined of the workpiece (14) which is located in the work station (12);
irradiating the surface (92) of the workpiece opening (16) to be machined by means of an, in particular continuous, laser beam (86) which is guided via the laser machining module (32) into the workpiece opening (16), the laser beam (86) rotating about the module axis (84), the laser machining module (32) comprising beam guiding optics (60) which are designed to guide a laser beam (86) for machining the surface (92) in an output direction (90), which is inclined with respect to the module axis (84) and a plane (85) orthogonal to the module axis (84), onto the surface (92) to be machined,
**characterized in that**
a beam deflecting apparatus (66), which deflects the laser beam (86) for machining the surface (92) in the output direction (90), rotates about the module axis (84) relative to a collimator unit (62) for collimating the laser beam (86) coming from a beam source (38) or relative to the collimator unit (62) and a focusing unit (64) for focusing the collimated laser beam (86) in order to cause the emerging laser beam (86) to rotate about the module axis (84), the workpiece (14) to be machined being positioned in the work station (12) of the device (10) in a transfer process of a transfer apparatus (18), an already machined workpiece (14) being removed from the work station (12) by means of a rotary movement of the transfer apparatus (18) in the transfer process at the same time, a closure apparatus (46) which spatially separates the work space (12) from a loading and unloading station (22) being opened to carry out the transfer process, the workpieces (14) which leave the work station (12) in the transfer process and the workpieces (14) which are moved into the work station (12) in the transfer process spatially passing the closure apparatus (46) at the same time and the closure apparatus (46) then being closed in order to spatially separate the work space (12) from the loading and unloading station (22).

16. Method according to the preceding claim, **characterized in that** the rotary movement of the beam deflecting apparatus (66) is superimposed with a translational relative movement between the workpiece (14) and the beam deflecting apparatus (66) of the laser machining module (32), in particular between the workpiece (14) and the laser machining module (32), which is directed in the direction of the module axis (84).

17. Method according to either of the two preceding claims,
**characterized in that** the laser machining module (32) comprises a rotation apparatus (70) which is designed to rotate the beam deflecting apparatus (66) relative to the collimator unit (62) or relative to the collimator unit (62) and the focusing unit (64) about the module axis (84) in order to cause the emerging laser beam (86) to rotate about the module axis (84), the rotation apparatus (70) comprising a direct drive (72) which, when viewed in the direction of the module axis (84), is arranged outside, in particular above, the workpiece opening (16) to be machined of the workpiece (14) during the machining process.

18. Method according to any of the 3 preceding claims, **characterized in that** the machining process is monitored at the same time as the laser machining, for this monitoring, an optical signal coming from the machined surface (92) being first guided along the optical path of the laser (86) used for machining in the laser machining module (32) and being decoupled from the optical path of the laser beam (86) by means of a beam deflecting apparatus (68) which can in particular be designed as an interference mirror, and being supplied to a sensor connection point (104).

19. Method according to any of the 4 preceding claims, **characterized in that** at least one workpiece (14) having a plurality of openings (16) to be machined is machined by means of the laser, the openings not currently being machined being covered by means of an aperture (45) assigned to the laser machining module (32) used during laser machining.

## Revendications

1. Dispositif (10) pour le grainage au laser de surfaces (92) de plusieurs ouvertures de pièces (16) espacées les unes des autres, en particulier de surfaces (92) d'alésages cylindriques ou d'un seul alésage cylindrique, comprenant au moins un poste de chargement et de déchargement (22) dans lequel une pièce (14) à usiner peut être chargée dans le dispositif (10) et une pièce (14) déjà usinée peut être retirée du dispositif (10), au moins un poste de travail (12), dans lequel le poste de travail (12) comprend au moins un module d'usinage au laser (32) pour l'usinage de pièces (14) dans le poste de travail (12), dans lequel le dispositif (10) comprend en outre un appareil de transfert (18) qui est conçu pour effectuer un transfert de pièces entre le poste de chargement et de déchargement (22) et le poste de travail (12), dans lequel l'appareil de transfert (18) est conçu pour effectuer, au moyen d'un mouvement de rotation, un processus de transfert d'une pièce (14) à usiner depuis le poste de chargement et de déchargement (22) dans le poste de travail (12) et, simultanément, au moyen du même mouvement de rotation, un processus de transfert d'une pièce (14) usinée depuis le poste de travail (12) dans le poste de chargement et de déchargement (22), dans lequel le poste de travail (12) comprend, d'une part, au moins un module d'usinage au laser (32) comportant un axe de module (84) et, d'autre part, un appareil de positionnement (28) par l'intermédiaire duquel un mouvement relatif entre une pièce (14) disposée dans le poste de travail (12) pour l'usinage et le module d'usinage au laser (32) peut être provoqué, dans lequel le module d'usinage au laser (32) comprend une optique de guidage de faisceau (60) qui est conçue pour guider un faisceau laser (86) pour l'usinage de la surface (92) dans une direction de déflexion (90), laquelle est inclinée par rapport à l'axe de module (84) et à un plan (85) orthogonal à l'axe de module (84), sur la surface (92) à usiner, et dans lequel le module d'usinage au laser (32) est conçu et disposé pour faire tourner le faisceau laser (86) autour de l'axe de module (84), dans lequel l'optique de guidage de faisceau (60) comprend une unité formant collimateur (62) pour la collimation du faisceau laser (86) provenant d'une source de faisceau (38) et une unité de focalisation (64) pour focaliser le faisceau laser (86) collimaté ainsi qu'un appareil de déviation de faisceau (66) définissant la direction de déflexion qui dévie le faisceau laser (86) pour l'usinage de la surface (92) depuis une direction principale (67) optique s'étendant le long de l'axe de module (84) dans la direction de déflexion (90), dans lequel l'appareil de rotation (70) est conçu pour faire tourner l'appareil de déviation de faisceau (66) définissant la direction de déflexion autour de l'axe de module (84) par rapport à l'unité formant collimateur (62) ou par rapport à l'unité formant collimateur (62) et à l'unité de focalisation (64) afin de provoquer la rotation du faisceau laser (86) sortant autour de l'axe de module (84), dans lequel le module d'usinage au laser (32) comprend, dans le chemin optique, avant l'appareil de déviation de faisceau (66) définissant la direction de déflexion, et en particulier avant l'unité de focalisation (64), un autre appareil de déviation de faisceau (68) qui dévie le faisceau laser dans la direction principale (67) optique, **caractérisé en ce que** le dispositif (10) comprend en outre un appareil de fermeture (46) qui est disposé et conçu pour séparer, dans un état de blindage, le poste de chargement et de déchargement (22) d'un espace de travail (34) du poste de travail (12) de manière sûre contre le faisceau laser, **et en ce que** le module d'usinage au laser (32) comprend un appareil de rotation (70) qui comprend un entraînement direct (72) qui est conçu comme un entraînement à arbre creux (74), et un rotor de l'entraînement à arbre creux (74) peut tourner autour d'un axe de rotation (82) de l'entraînement à arbre creux (74) qui correspond à l'axe de module (84), **et en ce que** l'unité de focalisation (64) est maintenue par l'intermédiaire d'un élément (101) en forme de manchon s'étendant dans le rotor et relié au boîtier (78), **et en ce que** le module d'usinage au laser (32) comprend un trajet d'écoulement de gaz de traitement (120), dans lequel ledit trajet comprend une section s'étendant le long de la direction principale (67) optique, dans lequel la section est disposée entre le premier autre appareil de déviation de faisceau (68) et l'appareil de déviation de faisceau (66) définissant la direction de déflexion, et le gaz de traitement sort au niveau de l'ouverture de sortie (95), dans lequel le trajet d'écoulement de gaz de traitement (120) est conçu de telle sorte que le gaz de traitement s'écoule le long du côté extérieur de l'élément (101) en forme de manchon qui sert à maintenir l'unité de focalisation (64).

2. Dispositif selon la revendication 1, **caractérisé en ce qu'**un stator (76) de l'entraînement à arbre creux (74) est relié de manière solidaire en rotation à un boîtier (78) du module d'usinage au laser (32).

3. Dispositif selon l'une des revendications précédentes, **caractérisé en ce que** le module d'usinage au laser (32) comprend un second autre appareil de déviation de faisceau (69) qui est conçu et disposé pour diriger le faisceau laser (86), de préférence par déviation dans une direction inclinée, en particulier orthogonale, par rapport à la direction principale (67) optique vers le premier autre appareil de déviation de faisceau (68).

4. Dispositif selon l'une des revendications précédentes, **caractérisé en ce que** l'un des autres appareils de déviation de faisceau (68, 69), en particulier le premier autre appareil de déviation de faisceau (68), découple du chemin optique du faisceau laser (86) un signal optique provenant de la surface de pièce (92) le long du chemin optique, de préférence le long de la direction principale (67) optique, et l'envoie à un point de raccordement de capteur (104).

5. Dispositif selon l'une des revendications précédentes, **caractérisé en ce que** le module d'usinage au laser (32) comprend une section de broche (94) conçue de manière à être rétrécie et conçue pour être introduite dans l'ouverture de pièce (16) à usiner, en particulier dans lequel l'entraînement direct (72) est disposé, vu le long de l'axe de module (84), à distance de la section de broche (94) conçue pour être introduite dans l'ouverture de pièce (16) à usiner.

6. Dispositif selon l'une des revendications précédentes,
**caractérisé en ce que,** au moyen de l'appareil de positionnement (28), un mouvement relatif entre la pièce (14) disposée dans le poste de travail (12) pour l'usinage et le module d'usinage au laser (32) peut être provoqué, lequel mouvement relatif s'étend dans un plan (85) orthogonal à l'axe de module (84) et/ou s'étend dans la direction de l'axe de module (84).

7. Dispositif selon l'une des revendications précédentes, **caractérisé en ce que** l'appareil de positionnement (28) comprend un agencement de chariots (30), en particulier un agencement de chariots en croix, dans lequel le module d'usinage au laser (32) est disposé sur l'agencement de chariots (30).

8. Dispositif selon l'une des revendications précédentes, **caractérisé en ce que** le module d'usinage au laser (32) comprend au moins un premier appareil à gaz d'arrêt (106) qui présente une sortie de gaz d'arrêt (110) dans la zone de l'ouverture de sortie (95) du faisceau laser, dans lequel la sortie de gaz d'arrêt (110) est disposée en particulier sur la section de broche (94), en particulier sur la moitié de la section de broche (94) comprenant l'ouverture de sortie (95).

9. Dispositif selon l'une des revendications précédentes, **caractérisé en ce que** le module d'usinage au laser (32) comprend au moins un second appareil à gaz d'arrêt (112) qui est conçu et disposé de telle sorte qu'il guide du gaz d'arrêt à l'intérieur d'un élément (101) en forme de manchon dans lequel l'unité de focalisation (64) est maintenue.

10. Dispositif selon l'une des revendications précédentes, **caractérisé en ce que** l'appareil de transfert (18) est conçu comme une table tournante, en particulier comme une table tournante élévatrice.

11. Dispositif selon la revendication précédente, **caractérisé en ce que** la table tournante est conçue pour transférer simultanément, par processus de transfert, respectivement au moins 2 pièces (14) du poste de chargement et de déchargement (22) au poste de travail et simultanément, par le même processus de transfert, respectivement au moins 2 pièces du poste de travail (12) au poste de chargement et de déchargement (22).

12. Dispositif selon l'une des revendications précédentes, **caractérisé en ce que** l'appareil de fermeture (46) comprend une paroi de séparation (48) pouvant être ouverte et fermée, laquelle présente une structure à double paroi, dans lequel une cavité (51) est délimitée par une paroi extérieure (52) et la paroi de séparation (48) comprend une unité formant capteur (54) qui est configurée et disposée pour détecter le moment où le rayonnement laser du laser du module d'usinage au laser (32) pénètre dans la cavité (51).

13. Dispositif selon l'une des revendications précédentes, **caractérisé en ce que** l'espace de travail (34) comprend un appareil d'aspiration (44), en particulier qui est disposé, dans une position d'usinage d'une pièce (14) à usiner dans l'espace de travail (34) du poste de travail (12), en dessous d'une ouverture de pièce (16) à usiner.

14. Dispositif selon l'une des revendications précédentes, **caractérisé en ce que** le dispositif comprend un compartiment de source de rayonnement (36) séparé de l'espace de travail (34) du poste de travail (12), dans lequel compartiment est disposée une source de rayonnement (38) pour la fourniture du faisceau laser (86) prévu pour l'usinage, dans lequel un guide de lumière (40) est prévu pour guider le faisceau laser (86) depuis la source de rayonnement (38) dans l'espace de travail (34) du poste de travail (12).

15. Procédé pour le grainage au laser d'ouvertures de pièces (16), en particulier de surfaces (92) d'alésages cylindriques, à l'aide d'un dispositif (10) pour l'usinage au laser selon l'une des revendications précédentes, comprenant les étapes consistant à :
positionner une pièce (14) à usiner dans un poste de travail (12) du dispositif (10) ;
positionner une section de broche (94) d'un module d'usinage au laser (32) du dispositif (10) dans l'ouverture de pièce (16) à usiner de la pièce (14) qui se trouve dans le poste de travail (12) ;
irradier la surface (92) de l'ouverture de pièce (16) à usiner au moyen d'un faisceau laser (86), en particulier continu, guidé dans l'ouverture de pièce (16) par l'intermédiaire du module d'usinage au laser (32), dans lequel le faisceau laser (86) tourne autour de l'axe de module (84), dans lequel le module d'usinage au laser (32) comprend une optique de guidage de faisceau (60) qui est conçue pour guider un faisceau laser (86) sur la surface (92) à usiner pour l'usinage de la surface (92) dans une direction de déflexion (90) qui est inclinée par rapport à l'axe de module (84) et à un plan (85) orthogonal à l'axe de module (84),
**caractérisé en ce que**
un appareil de déviation de faisceau (66), lequel dévie le faisceau laser (86) pour l'usinage de la surface (92) dans la direction de déflexion (90), tourne autour de l'axe de module (84) par rapport à une unité formant collimateur (62) pour la collimation du faisceau laser (86) provenant d'une source de faisceau (38) ou par rapport à l'unité formant collimateur (62) et à une unité de focalisation (64) pour focaliser le faisceau laser (86) collimaté, afin de provoquer la rotation du faisceau laser (86) sortant autour de l'axe de module (84), dans lequel le positionnement de la pièce (14) à usiner dans le poste de travail (12) du dispositif (10) est effectué lors d'un processus de transfert d'un appareil de transfert (18), dans lequel, lors du processus de transfert, une pièce (14) déjà usinée est retirée simultanément du poste de travail (12) au moyen d'un mouvement de rotation de l'appareil de transfert (18), dans lequel un appareil de fermeture (46), lequel sépare spatialement l'espace de travail (12) d'un poste de chargement et de déchargement (22), est ouvert pour la réalisation du processus de transfert, dans lequel les pièces (14) qui quittent le poste de travail (12) lors du processus de transfert et les pièces (14) qui sont déplacées dans le poste de travail (12) lors du processus de transfert passent simultanément spatialement à travers l'appareil de fermeture (46) et l'appareil de fermeture (46) est ensuite fermé afin de séparer spatialement l'espace de travail (12) du poste de chargement et de déchargement (22).

16. Procédé selon la revendication précédente, **caractérisé en ce qu'**au mouvement de rotation de l'appareil de déviation de faisceau (66) est superposé un mouvement relatif de translation entre la pièce (14) et l'appareil de déviation de faisceau (66) du module d'usinage au laser (32), en particulier entre la pièce (14) et le module d'usinage au laser (32), lequel mouvement relatif est dirigé le long de la direction de l'axe de module (84).

17. Procédé selon l'une des deux revendications précédentes,
**caractérisé en ce que** le module d'usinage au laser (32) comprend un appareil de rotation (70) qui est conçu pour faire tourner l'appareil de déviation de faisceau (66) autour de l'axe de module (84) par rapport à l'unité formant collimateur (62) ou par rapport à l'unité formant collimateur (62) et à l'unité de focalisation (64) afin de provoquer la rotation du faisceau laser (86) sortant autour de l'axe de module (84), dans lequel l'appareil de rotation (70) comprend un entraînement direct (72) qui, pendant le processus d'usinage, est disposé, vu dans la direction de l'axe de module (84), à l'extérieur, en particulier au-dessus, de l'ouverture de pièce (16) à usiner de la pièce (14).

18. Procédé selon l'une des 3 revendications précédentes,
**caractérisé en ce qu'**une surveillance du processus d'usinage est réalisée en même temps que l'usinage au laser, dans lequel, pour ladite surveillance, un signal optique provenant de la surface (92) usinée est d'abord guidé le long du chemin optique du laser (86) utilisé pour l'usinage dans le module d'usinage au laser (32) et est découplé du chemin optique du faisceau laser (86) au moyen d'un appareil de déviation de faisceau (68), lequel peut en particulier être conçu comme un miroir interférentiel, et est amené à un point de raccordement de capteur (104).

19. Procédé selon l'une des 4 revendications précédentes,
**caractérisé en ce qu'**au moins une pièce (14) comportant plusieurs ouvertures (16) à usiner est usinée au moyen du laser, dans lequel, pendant l'usinage au laser, les ouvertures momentanément non usinées sont recouvertes au moyen d'un écran (45) associé au module d'usinage au laser (32) utilisé.
